# EUROPEAN PATENT SPECIFICATION

(11) **EP 3 805 818 B1**
(45) Date of publication and mention of the grant of the patent: **03.09.2025**
(21) Application number: 19808264.6
(22) Date of filing: 16.05.2019
(51) Int. Cl.: G02B 5/02, B29C 59/02, F21V 5/00, G02B 1/118, G02B 3/00, G02B 5/18, G02B 17/00, G02B 17/08, B29D 11/00, B29C 59/04

(54) **RESIN-LAMINATED OPTICAL BODY, LIGHT SOURCE UNIT, OPTICAL UNIT, LIGHT IRRADIATION DEVICE, IMAGE DISPLAY DEVICE, METHOD FOR MANUFACTURING RESIN-LAMINATED OPTICAL BODY, AND METHOD FOR MANUFACTURING LIGHT SOURCE UNIT**
HARZLAMINIERTER OPTISCHER KÖRPER, LICHTQUELLENEINHEIT, OPTISCHE EINHEIT, LICHTBESTRAHLUNGSVORRICHTUNG, BILDANZEIGEVORRICHTUNG, VERFAHREN ZUR HERSTELLUNG EINES HARZLAMINIERTEN OPTISCHEN KÖRPERS UND VERFAHREN ZUR HERSTELLUNG EINER LICHTQUELLENEINHEIT
CORPS OPTIQUE RECOUVERT D'UNE COUCHE DE RÉSINE, UNITÉ SOURCE DE LUMIÈRE, UNITÉ OPTIQUE, DISPOSITIF D'EXPOSITION À LA LUMIÈRE, DISPOSITIF D'AFFICHAGE D'IMAGE, PROCÉDÉ DE FABRICATION D'UN CORPS OPTIQUE RECOUVERT D'UNE COUCHE DE RÉSINE ET PROCÉDÉ DE FABRICATION D'UNE UNITÉ SOURCE DE LUMIÈRE

(30) Priority: 25.05.2018 JP 2018100529
(43) Date of publication of application: 14.04.2021
(60) Divisional application: 25191019.6
(73) Proprietor: Dexerials Corporation, Tokyo 141-0032 (JP)
(72) Inventor: TAZAWA, Hiroshi, Tokyo 141-0032 (JP); ARIMA, Mitsuo, Tokyo 141-0032 (JP); SASAKI, Koji, Tokyo 141-0032 (JP)
(74) Representative: Müller-Boré & Partner Patentanwälte PartG mbB
(86) International application number: PCT/JP2019/019542
(87) International publication number: WO 2019/225479

(56) References cited:
- EP-A2- 2 213 447
- WO-A1-2006/080729
- WO-A1-2010/125795
- AU-A1- 2013 325 559
- JP-A- 2008 296 428
- JP-A- 2011 503 643
- JP-A- 2012 103 290
- JP-A- 2013 256 015
- JP-A- 2016 152 309
- US-A1- 2011 316 006

## Description

### Technical Field

The present invention relates to a resin laminated optical body, a light source unit, an optical unit, a light irradiation device, an image display device, a method for manufacturing a resin laminated optical body, and a method for manufacturing a light source unit.

### Background Art

In recent years, optical apparatuses (such as various image projecting devices and imaging devices, for example) including a large number of optical elements have been developed and have become popular. Reduction in size and weight of these optical apparatuses is strongly demanded from the perspectives of wearing on the human body or incorporation into an infrastructure such as various apparatuses or vehicles. In order to meet such a demand, technologies for combining a plurality of optical elements have been proposed as disclosed in Patent Literature 1 and Patent Literature 2, for example. Specifically, Patent Literature 1 and Patent Literature 2 disclose that, by combining an anti-reflection structure in a surface of an optical lens, the optical lens is provided with an anti-reflection property.

### Citation List

### Patent Literature

| | |
|---|---|
| Patent Literature 1: | JP 2013-256015A |
| Patent Literature 2: | JP 2001-300944A |
| Patent Literature 3: | JP 2017-174542A |

Further prior art can be found in JP 2016 152309 A, WO 2006/080729 A1 and EP 2 213 447 A2.

### Summary of Invention

### Technical Problem

As disclosed in Patent Literature 3, for example, an image projecting device is often provided with a light diffuser panel (defined as a light diffuser sheet in Patent Literature 3) from the perspective of evenly displaying an image. However, a conventional light diffuser panel is separate from an optical lens. Thus, a large space for storing the light diffuser panel and the optical lens is required in the image projecting device, and the image projecting device is increased in size accordingly. Further, in the case where the optical lens and the light diffuser panel are separate from each other, interface reflection occurs at the surface of the optical lens or the surface of the light diffuser panel, and deterioration in light emission quality, such as deterioration in light transmittance or occurrence of ghost due to stray light in an enclosure, occurs in some cases.

Further, a light source unit in which a light source such as LED (light emitting diode) or laser is contained in an optical lens is used in some cases as a light source of an image projecting device. However, a conventional light source unit and another optical element are separate from each other, so that the image projecting device is increased in size. Further, interface reflection occurs at the surface of the light source unit or the surface of the other optical element, and deterioration in light emission quality, such as deterioration in light transmittance or occurrence of ghost, occurs in some cases.

The above-described light diffuser panel and light source unit are used in some cases in other types of optical apparatuses, and problems of size increase and deterioration in light emission quality may also occur in these optical apparatuses. In this manner, there is much more room to improve an optical apparatus from the perspectives of size reduction of the optical apparatus and improvement of the light emission quality.

Therefore, the present invention was made in view of the above-described problems, and the present invention has an object to reduce an optical apparatus in size and to improve the light emission quality.

### Solution to Problem

According to the present invention as defined in claim 1, there is provided a light source unit including a light source, an optical base material containing the light source, and a resin layer provided on a light emitting surface of the optical base material. A micro concave-convex structure is formed in a surface of the resin layer.

Herein, the micro concave-convex structure may include at least one of a moth-eye structure, a light diffusing structure, a microlens array structure, and a diffraction grating structure.

In addition, the micro concave-convex structure may include the moth-eye structure, and an average interval between micro concavities or micro convexities constituting the micro concave-convex structure may be 50 nm to 400 nm. In addition, a height difference between one of micro concavities and one of micro convexities adjacent to each other may be 100 to 500 nm.

According to another aspect of the present invention, there is provided an optical unit as defined in claim 5, including the above-described light source unit,

According to another aspect of the present invention, there is provided a light irradiation device including the above-described optical unit.

According to another aspect of the present invention, there is provided an image display device including the above-described light irradiation device.

According to another aspect of the present invention, there is provided a method for manufacturing a light source unit, as defined in claim 8, including a first step of preparing an optical base material having a curved surface and containing a light source, a second step of forming an uncured resin layer on the curved surface of the optical base material, a third step of preparing a flexible master having an inverted structure of a micro concave-convex structure formed in a surface, the flexible master having flexibility, a fourth step of bringing the flexible master into proximity to the uncured resin layer, a fifth step of pressing the inverted structure of the flexible master against the uncured resin layer while applying a printing pressure to the flexible master to deform the flexible master, and a sixth step of curing the uncured resin layer in a state where the inverted structure of the flexible master is pressed against the uncured resin layer to form a resin layer on the curved surface of the optical base material.

In addition, there is provided a method for manufacturing a light source unit, including a first step of preparing an optical base material having a curved surface, a second step of forming an uncured resin layer on the curved surface of the optical base material, a third step of preparing a flexible master having an inverted structure of a micro concave-convex structure formed in a surface, the flexible master having flexibility, a fourth step of bringing the flexible master into proximity to the uncured resin layer, a fifth step of pressing the inverted structure of the flexible master against the uncured resin layer while applying a printing pressure to the flexible master to deform the flexible master, a sixth step of curing the uncured resin layer in a state where the inverted structure of the flexible master is pressed against the uncured resin layer to form a resin layer on the curved surface of the optical base material, and a seventh step of placing, on a light source, the optical base material on which the resin layer has been formed.

Herein, the micro concave-convex structure may include at least one of a moth-eye structure, a light diffusing structure, a microlens array structure, and a diffraction grating structure.

In addition, the micro concave-convex structure may include the moth-eye structure, and an average interval between micro concavities or micro convexities constituting the micro concave-convex structure may be 50 nm to 400 nm. In addition, a height difference between one of micro concavities and one of micro convexities adjacent to each other may be 100 to 500 nm.

### Advantageous Effects of Invention

According to the present invention, as described above, an optical apparatus can be reduced in size, and the light emission quality can be improved.

### Brief Description of Drawings

[FIG. 1] FIG. 1 is a cross-section diagram illustrating an example of a resin laminated optical body according to an embodiment of the present invention;
[FIG. 2] FIG. 2 is a cross-section diagram illustrating an example of a micro concave-convex structure formed in a surface of the resin laminated optical body according to the embodiment;
[FIG. 3] FIG. 3 is a cross-section diagram illustrating another example of the resin laminated optical body according to the embodiment;
[FIG. 4] FIG. 4 is a cross-section diagram illustrating another example of the resin laminated optical body according to the embodiment;
[FIG. 5] FIG. 5 is a cross-section diagram illustrating another example of the resin laminated optical body according to the embodiment;
[FIG. 6] FIG. 6 is a cross-section diagram illustrating another example of the resin laminated optical body according to the embodiment;
[FIG. 7] FIG. 7 is a cross-section diagram illustrating another example of the resin laminated optical body according to the embodiment;
[FIG. 8] FIG. 8 is a cross-section diagram illustrating another example of the resin laminated optical body according to the embodiment;
[FIG. 9] FIG. 9 is a cross-section diagram illustrating an example of a light source unit according to an embodiment of the present invention;
[FIG. 10] FIG. 10 is a cross-section diagram for describing a method for manufacturing a resin laminated optical body according to the embodiment;
[FIG. 11] FIG. 11 is a cross-section diagram for describing the method for manufacturing a resin laminated optical body according to the embodiment;
[FIG. 12] FIG. 12 is a cross-section diagram for describing the method for manufacturing a resin laminated optical body according to the embodiment;
[FIG. 13] FIG. 13 is a cross-section diagram for describing the method for manufacturing a resin laminated optical body according to the embodiment;
[FIG. 14] FIG. 14 is a cross-section diagram for describing the method for manufacturing a resin laminated optical body according to the embodiment;
[FIG. 15] FIG. 15 is a cross-section diagram for describing the method for manufacturing a resin laminated optical body according to the embodiment;
[FIG. 16] FIG. 16 is a cross-section diagram for describing the method for manufacturing a resin laminated optical body according to the embodiment;
[FIG. 17] FIG. 17 is a perspective view illustrating an exemplary appearance of a master according to an embodiment of the present invention;
[FIG. 18] FIG. 18 is a block diagram illustrating an exemplary configuration of an exposure device according to the embodiment;
[FIG. 19] FIG. 19 is a schematic diagram illustrating an example of a transfer device that manufactures a flexible master according to the embodiment by roll-to-roll;
[FIG. 20] FIG. 20 is an explanatory diagram illustrating an exemplary application of a resin laminated optical body and a light source unit according to an embodiment of the present invention;
[FIG. 21] FIG. 21 is an explanatory diagram illustrating an exemplary application of the resin laminated optical body and the light source unit according to the embodiment;
[FIG. 22] FIG. 22 is an explanatory diagram illustrating an exemplary application of the resin laminated optical body and the light source unit according to the embodiment;
[FIG. 23] FIG. 23 is an explanatory diagram illustrating an exemplary application of the resin laminated optical body and the light source unit according to the embodiment;
[FIG. 24] FIG. 24 is an explanatory diagram illustrating an exemplary application of the resin laminated optical body and the light source unit according to the embodiment;
[FIG. 25] FIG. 25 is an explanatory diagram illustrating an exemplary application of the resin laminated optical body and the light source unit according to the embodiment; and
[FIG. 26] FIG. 26 is an explanatory diagram illustrating an exemplary application of the resin laminated optical body and the light source unit according to the embodiment.

### Description of Embodiments

Hereinafter, referring to the appended drawings, preferred embodiments of the present invention will be described in detail. It should be noted that, in this specification and the appended drawings, structural elements that have substantially the same function and structure are denoted with the same reference numerals, and repeated explanation thereof is omitted.

### <1. Configuration of resin laminated optical body, that is part of the claimed light source unit>

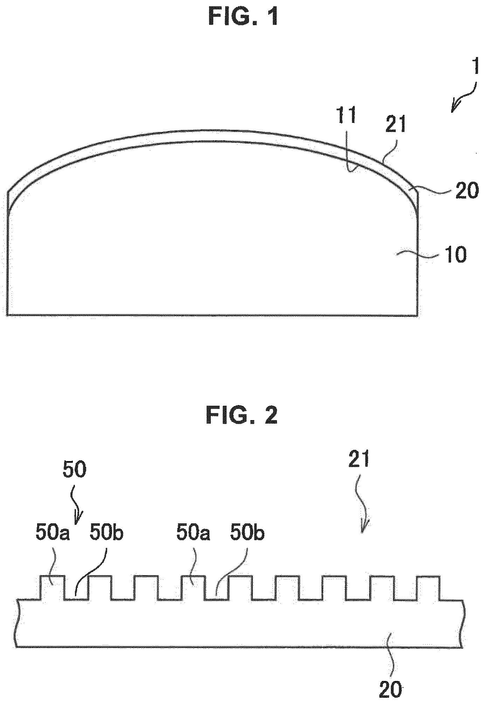

First, a configuration of a resin laminated optical body 1 according to an embodiment of the present invention will be described on the basis of FIG. 1 to FIG. 2. As illustrated in FIG. 1, the resin laminated optical body 1 includes an optical base material 10 and a resin layer 20. The optical base material 10 is a convex lens, and has a convex curved surface 11. Note that, in the example of FIG. 1, the optical base material 10 is a plano-convex lens (convex lens having a flat surface on one side), but may be a double-convex lens (convex lens having convex surfaces on both sides). Alternatively, the optical base material 10 may be another type of lens such as, for example, a concave lens or Fresnel lens. The shape of the optical base material 10 is not limited to those described above, but may have an aspherical shape, a round shape, a square shape, an asymmetric shape, or the like, for example. The optical base material 10 may be a mirror.

The material of the optical base material 10 is not particularly restricted, but may be a material used for an optical lens or optical mirror. Examples of the material of the optical base material 10 include polycarbonate, acrylate, cycloolefin polymers, cycloolefin copolymers, polypropylene, glass, and the like. The material of the optical base material 10 may be selected as appropriate in accordance with the use and the like of the resin laminated optical body 1. Note that, in a case of using the optical base material 10 as an optical mirror, mirror surface processing (such as evaporation of a metal film or dielectric, for example) may be performed on the curved surface 11.

The curved surface 11 may be subjected to various types of pretreatment (treatment before laminating the resin layer 20 on the curved surface 11) in order to improve adhesion between the curved surface 11 and the resin layer 20. Examples of such pretreatment include corona treatment, excimer treatment, UV ozone treatment, heat treatment, flame treatment (treatment of applying flame to the curved surface 11), solvent cleaning, primer applying treatment, and the like.

The resin layer 20 is provided on the curved surface 11 of the optical base material 10. The curved surface 11 of the optical base material 10 and the resin layer 20 are in close contact, and the optical base material 10 and the resin layer 20 are integrated with each other. A micro concave-convex structure 50 is formed in a surface 21 of the resin layer 20 (the surface opposite to the optical base material 10), as illustrated in FIG. 2. The micro concave-convex structure 50 includes a large number of micro convexities 50a and a large number of micro concavities 50b. The resin layer 20 is provided with optical properties derived from this micro concave-convex structure 50. Various optical properties can be provided for the resin layer 20 by changing the shape of the micro concave-convex structure 50. In particular, in the present embodiment, the micro concave-convex structure 50 is a light diffusing structure. Specifically, the shape of the micro convexities 50a or the micro concavities 50b is adjusted such that light passing through the optical base material 10 and arrived at the micro concave-convex structure 50 is diffused and radiated to the outside. Therefore, the resin layer 20 is provided with a light diffusing property.

An average interval between two adjacent micro concavities 50b, 50b or an average interval between two adjacent micro convexities 50a, 50a preferably is 1 to 150 µm. Further, a height difference between one of the micro concavities 50b and one of the micro convexities 50a adjacent to each other preferably is 0.5 to 50 µm. In a case where at least one (preferably both) of these conditions is satisfied, the light diffusing property is further increased. The micro concave-convex structure 50 may be a concave-convex structure in which the above-described average interval is less than or equal to 150 µm, for example, and the above-described height difference is less than or equal to 50 µm, for example.

Herein, the shape of the micro concave-convex structure 50 is observed using a scanning electron microscope (SEM) or an atomic force microscope (AFM), for example. Then, the above-described average interval or height difference is measured on the basis of an observation result. For example, the average interval between the micro concavities 50b, 50b is measured by the following method. That is, the cross section at the center of the resin laminated optical body 1 (the cross section passing through and being parallel to the optical axis) is observed. Then, the distance between the central points (the central points of bottom surfaces) of adjacent micro concavities 50b is measured. Then, some distances between the central points are measured, and their arithmetic mean value may be determined as the average interval between the micro concavities 50b, 50b. The average interval between the micro convexities 50a, 50a is also measured by a similar method. That is, the distance between the peaks (the central points of upper ends) of adjacent micro convexities 50a is measured. Then, some peak-to-peak distances are measured, and their arithmetic mean value may be determined as the average interval between the micro convexities 50a, 50a. A height difference between one of the micro concavities 50b and one of the micro convexities 50a adjacent to each other is the distance between the central point of the bottom surface of the micro concavity 50b and the peak of the micro convexity 50a (the distance in the thickness direction of the resin layer 20).

The thickness of the resin layer 20 is not particularly restricted, but is desirably less than or equal to 200 µm, for example. If the resin layer 20 is extremely thick, film stresses are accumulated because of cure shrinkage of resin during light (UV) curing, and poor contact may occur between the optical base material 10 and the resin layer 20.

Herein, as described above, the surface 21 of the resin layer 20 is not flat since the micro concave-convex structure 50 is formed therein. Thus, the thickness of the resin layer 20 is measured by the following method, for example. That is, the cross section at the center of the resin laminated optical body 1 (the cross section passing through and being parallel to the optical axis) is observed using various types of three-dimensional measuring equipment (for example, "Three-dimensional measuring equipment UA3P" made by Panasonic Corporation). Then, the obtained curve of the surface 21 is subjected to curve fitting by the least squares method. The cross section at the center of the optical base material 10 (that is, before processing) (the cross section passing through and being parallel to the optical axis) is observed, and an obtained image is compared with the cross section at the center of the resin laminated optical body 1 to specify a region of the resin layer 20. Then, the distance from the curve of the surface 21 obtained by curve fitting described above to the curve of the curved surface 11 is determined as the thickness of the resin layer 20. In examples which will be described later, the thickness of the resin layer 20 was measured by this method. Note that the thickness was determined as the arithmetic mean value of values measured at some measurement points. For the measurement, "Three-dimensional measuring equipment UA3P" made by Panasonic Corporation was used.

In this manner, in the resin laminated optical body 1 according to the present embodiment, the resin layer 20 having the light diffusing property and the optical base material 10 are integrated with each other. Therefore, by applying the resin laminated optical body 1 to an optical apparatus, the optical apparatus can be reduced in size. Furthermore, as compared with the case of arranging a substrate having the light diffusing property and an unprocessed optical base material 10 as separate components, the light transmittance is improved and ghost is prevented from occurring since an interface at which reflection may occur is reduced by integrating these components in the present embodiment. That is, the light emission quality is improved.

Herein, some regions of the surface 21 of the resin layer 20 may be provided with the light diffusing property, and other regions may be provided with a different optical property. That is, the type of the micro concave-convex structure 50 may be changed per region of the surface 21. Examples of the micro concave-convex structure 50 other than the light diffusing structure include a moth-eye structure, light diffusing structure, microlens array structure, diffraction grating structure, or the like. That is, any one or more types of these structures may be mixed in the surface 21 of the resin layer 20 in addition to the light diffusing structure.

In a case where the micro concave-convex structure 50 is a moth-eye structure, the micro convexities 50a or the micro concavities 50b are arrayed on the surface 21 at an average cycle less than or equal to a visible light wavelength (the average cycle herein is synonymous with the average interval described above). Accordingly, external light is restrained from reflecting off the surface 21. Furthermore, the average interval between the micro concavities 50b, 50b or the micro convexities 50a, 50a constituting the micro concave-convex structure preferably is 50 nm to 400 nm, and the height difference between one of the micro concavities 50b and one of the micro convexities 50a adjacent to each other preferably is 100 to 500 nm. In this case, reflection of external light is restrained more effectively. Therefore, in the case where the micro concave-convex structure 50 is a moth-eye structure, the resin layer 20 is provided with an anti-reflection property. The micro concave-convex structure 50 as the moth-eye structure may be a concave-convex structure in which the above-described average interval is less than or equal to 400 nm, for example, and the above-described height difference is less than or equal to 500 nm, for example.

In a case where the micro concave-convex structure 50 is a microlens array structure, the micro convexities 50a or the micro concavities 50b are micron-order microlenses. In a case where the micro concave-convex structure 50 is a diffraction grating structure, the micro convexities 50a or the micro concavities 50b have the shape of diffraction grating. The micro concave-convex structure 50 other than the light diffusing structure is not limited to the above-described examples. In addition, the micro concave-convex structure 50 having the same type of pattern but adjusted to have different optical properties may be mixed or arrayed in the surface 21 of the resin layer 20. For example, the micro concave-convex structure 50 may be designed such that some regions and other regions among regions where the light diffusing structure is formed have different light diffusing properties. In this case, the average interval or height difference described above should only be changed per region.

The resin layer 20 includes a cured curing resin. The cured curing resin preferably is transparent. The curing resin includes a polymerizable compound and a curing initiator. The polymerizable compound is a resin that is cured by the curing initiator. Examples of the polymerizable compound include a polymerizable epoxy compound or a polymerizable acrylic compound. A polymerizable epoxy compound is a monomer, oligomer, or prepolymer having one or multiple epoxy groups in the molecule. Examples of polymerizable epoxy compounds include various bisphenol epoxy resins (such as bisphenol A and F), novolac epoxy resin, various modified epoxy resins such as rubber and urethane, naphthalene epoxy resin, biphenyl epoxy resin, phenol novolac epoxy resin, stilbene epoxy resin, triphenol methane epoxy resin, dicyclopentadiene epoxy resin, triphenyl methane epoxy resin, and prepolymers of the above.

A polymerizable acrylic compound is a monomer, oligomer, or prepolymer having one or multiple acrylic groups in the molecule. Herein, monomers are further classified into monofunctional monomers having one acrylic group in the molecule, bifunctional monomers having two acrylic groups in the molecule, and multifunctional monomers having three or more acrylic groups in the molecule.

Examples of "monofunctional monomers" include carboxylic acids (acrylic acids or the like), hydroxy monomers (2-hydroxyethyl acrylate, 2-hydroxypropyl acrylate, 4-hydroxybutyl acrylate), alkyl or alicyclic monomers (isobutyl acrylate, t-butyl acrylate, isooctyl acrylate, lauryl acrylate, stearyl acrylate, isobornyl acrylate, cyclohexyl acrylate), other functional monomers (2-methoxyethyl acrylate, methoxyethylene glycol acrylate, 2-ethoxyethyl acrylate, tetrahydrofurfuryl acrylate, benzyl acrylate, ethyl carbitol acrylate, phenoxyethyl acrylate, N,N-dimethylamino ethyl acrylate, N,N-dimethylamino propyl acrylamide, N,N-dimethyl acrylamide, acryloyl morpholine, N-isopropyl acrylamide, N,N-diethyl acrylamide, N-vinylpyrrolidone, 2-(perfluorooctyl)ethyl acrylate, 3-perfluorohexyl-2-hydroxypropyl acrylate, 3-perfluorooctyl-2-hydroxypropyl-acrylate, 2-(perfluorodecyl)ethyl-acrylate, 2-(perfluoro-3-methylbutyl)ethyl acrylate), 2,4,6-tribromophenol acrylate, 2,4,6-tribromophenol methacrylate, 2-(2,4,6-tribromophenoxy)ethyl acrylate), and 2-ethylhexyl acrylate.

Examples of "bifunctional monomers" include tri(propylene glycol) di-acrylate, trimethylolpropane-diaryl ether, and urethane acrylate.

Examples of "multifunctional monomers" include trimethylolpropane tri-acrylate, dipentaerythritol penta- and hexa-acrylate, and ditrimethylolpropane tetra-acylate.

Examples other than the polymerizable acrylic compounds listed above include acrylmorpholine, glycerol acrylate, polyether acrylates, N-vinylformamide, N-vinylcaprolactone, ethoxy diethylene glycol acrylate, methoxy triethylene glycol acrylate, polyethylene glycol acrylate, ethoxylated trimethylolpropane tri-acrylate, ethoxylated bisphenol A di-acrylate, aliphatic urethane oligomers, and polyester oligomers.

By adjusting the type, compounding ratio, and the like of constitutional units of the curing resin, that is, a monomer, an oligomer, or a prepolymer, the properties of the resin layer 20, such as the refractive index and viscosity, for example, can be adjusted.

The curing initiator is a material that cures the curing resin. Examples of the curing initiator include thermal curing initiators and light-curing initiators, for example. The curing initiator may also be one that cures by some kind of energy beam other than heat or light (for example, an electron beam) or the like. In the case where the curing initiator is a thermal curing initiator, the curing resin is a thermosetting resin, whereas in the case where the curing initiator is a light-curing initiator, the curing resin is a light-curing resin.

Herein, from the perspective of processability of the resin layer 20, the curing initiator preferably is an ultraviolet-curing initiator. An ultraviolet-curing initiator is a type of light-curing initiator. Examples of ultraviolet-curing initiators include 2,2-dimethoxy-1,2-diphenylethane-1-one, 1-hydroxy-cyclohexyl phenyl ketone, and 2-hydroxy-2-methyl-1-phenyl propane-1-one. Consequently, the curing resin preferably is an ultraviolet-curing resin. From the perspective of transparency, the curing resin more preferably is an ultraviolet-curing acrylic resin. The curing resin can be selected and adjusted as appropriate in accordance with optical properties of materials constituting the optical base material 10 and an optical design of the device.

### <2. Various variations of resin laminated optical body, that is part of the claimed light source unit>

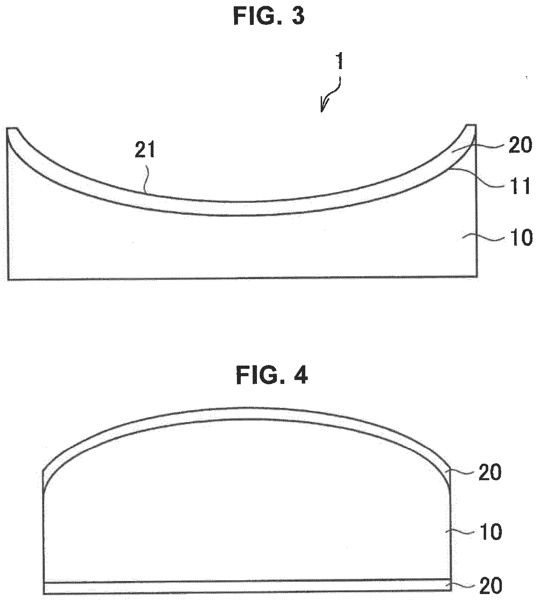

Next, various variations of the resin laminated optical body 1 will be described on the basis of FIG. 3 to FIG. 8. In the variation illustrated in FIG. 3, the optical base material 10 is a plano-concave lens (concave lens having a flat surface on one side). The resin layer 20 is formed on the curved surface 11 of the optical base material 10, and the resin layer 20 is in close contact with the curved surface 11 of the optical base material 10. The micro concave-convex structure 50 described above is formed in the resin layer 20.

In the variation illustrated in FIG. 4, the resin layers 20 are formed on both the front and rear surfaces of the optical base material 10 illustrated in FIG. 1. The micro concave-convex structure 50 described above is formed in each of the resin layers 20. These micro concave-convex structures 50 may be of the same type, or may be different from each other. For example, the micro concave-convex structures 50 on both the front and rear surfaces may be light diffusing structures. The micro concave-convex structure 50 on the front surface (herein, the curved surface 11) side may be a light diffusing structure, and the micro concave-convex structure 50 on the rear surface side may be a moth-eye structure. Conversely, the micro concave-convex structure 50 on the front surface side may be a moth-eye structure, and the micro concave-convex structure 50 on the rear surface side may be a light diffusing structure. That is, the micro concave-convex structures 50 formed in the resin laminated optical body 1 should only include a light diffusing structure. The same also applies to the following respective variations.

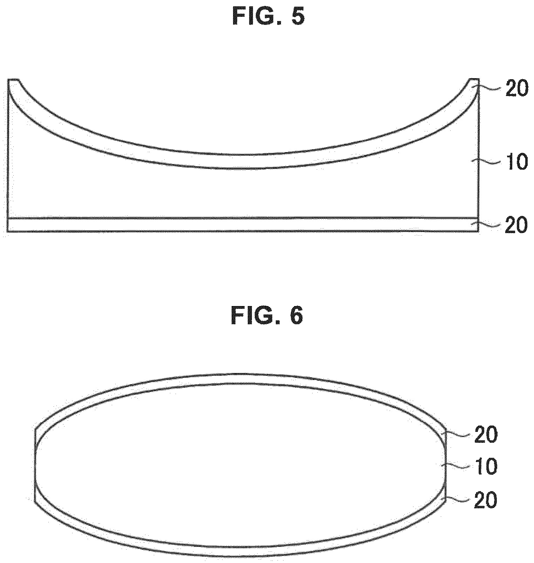

In the variation illustrated in FIG. 5, the resin layers 20 are formed on both the front and rear surfaces of the optical base material 10 illustrated in FIG. 3. The micro concave-convex structure 50 described above is formed in each of the resin layers 20. The micro concave-convex structures 50 may be of the same type, or may be different from each other.

In the variation illustrated in FIG. 6, the optical base material 10 is a double-convex lens (convex lens having convex surfaces on both the front and rear surfaces), and the resin layers 20 are formed on both the front and rear surfaces. The micro concave-convex structure 50 described above is formed in each of the resin layers 20. The micro concave-convex structures 50 may be of the same type, or may be different from each other.

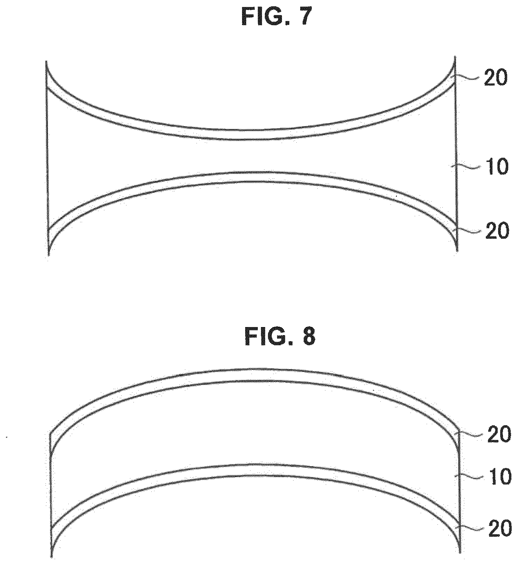

In the variation illustrated in FIG. 7, the optical base material 10 is a double-concave lens (concave lens having concave surfaces on both the front and rear surfaces), the resin layers 20 are formed on both the front and rear surfaces. The micro concave-convex structure 50 described above is formed in each of the resin layers 20. The micro concave-convex structures 50 may be of the same type, or may be different from each other.

In the variation illustrated in FIG. 8, the front surface of the optical base material 10 is a convex surface, and the rear surface is a concave surface. Further, the resin layers 20 are formed on both the front and rear surfaces of the optical base material 10. The micro concave-convex structure 50 described above is formed in each of the resin layers 20. The micro concave-convex structures 50 may be of the same type, or may be different from each other.

Obviously, the resin laminated optical body 1 according to the present embodiment is not limited to the example of FIG. 1 and the above-described variations of FIG. 4 to FIG. 8. For example, in FIG. 4 to FIG. 8, the resin layer 20 on the front surface side or the rear surface side may be omitted.

### <3. Configuration of light source unit>

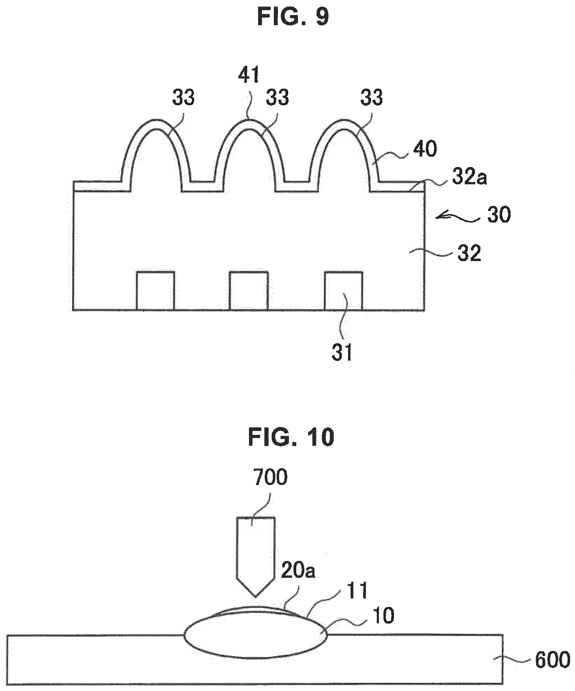

Next, a configuration of the light source unit 30 according to the present embodiment will be described on the basis of FIG. 2 and FIG. 9. As illustrated in FIG. 9, the light source unit 30 includes a light source 31, an optical base material 32, and a resin layer 40. The light source 31 is a device or member that emits light. The type of the light source 31 is not particularly limited, and may be a light emitting diode (LED), for example, or may be a laser light source, or the like. Although three light sources 31 are depicted in FIG. 9, the number of the light sources 31 included in the light source unit 30 is adjusted as appropriate according to the use and the like of the light source unit 30.

Herein, the light source 31 is contained in the optical base material 32. The light source 31 may be integrated with the optical base material 32, or may be separate from the optical base material 32. The light source unit 30 outputs light emitted from the light source 31 to the outside through an interface 32a. A curved surface 33 is formed on the interface 32a, and the resin layer 40 is laminated along the curved surface 33. In the example of FIG. 9, the curved surface 33 is a convex surface, but may be a concave surface. Therefore, the optical base material 32 functions as a lens for the light source 31. The curved surface 33 may be omitted. The material of the optical base material 32 is not particularly restricted, but may be a material similar to that of the optical base material 10 described above, for example.

The interface 32a may be subjected to various types of pretreatment (treatment before laminating the resin layer 20 on the light emitting surface 32a) in order to improve adhesion to the resin layer 40. Examples of such pretreatment include corona treatment, excimer treatment, UV ozone treatment, heat treatment, flame treatment (treatment of applying flame to the curved surface 11), solvent cleaning, primer applying treatment, and the like.

The resin layer 40 is provided on the interface 32a of the optical base material 32. The micro concave-convex structure 50 illustrated in FIG. 2 is formed in a surface 41 of the resin layer 40. The detailed description of the micro concave-convex structure 50 is as given above. The resin layer 40 is provided with an optical property derived from this micro concave-convex structure 50. By changing the shape of the micro concave-convex structure 50, various optical properties can be provided for the resin layer 40.

Herein, the resin layer 40 is provided with an arbitrary optical property. That is, the micro concave-convex structure 50 may be a moth-eye structure, light diffusing structure, microlens array structure, or diffraction grating structure, for example. That is, the optical property of the resin layer 40 is not necessarily limited to the light diffusing property. Any one or more types of these structures may be mixed in the surface 41 of the resin layer 40. In addition, the shape of the micro concave-convex structure 50 may be adjusted to have the same type of pattern (the light diffusing structure, for example) but have different optical properties. Materials constituting the resin layer 40 and the thickness may be similar to those of the resin layer 20, for example. The thickness of the resin layer 40 is measured similarly to the resin layer 20.

In this manner, in the present embodiment, the light source unit 30 and the resin layer 40 having various optical properties are integrated with each other. Therefore, by applying the light source unit 30 to an optical apparatus, the optical apparatus can be reduced in size. Furthermore, by forming a moth-eye structure in the surface of the light source unit 30, for example, reflection off the interface 32a is restrained, the light transmittance is improved, and ghost is prevented from occurring. That is, the light emission quality is improved.

### <4. Method for manufacturing resin laminated optical body, that is part of the claimed light source unit>

The resin laminated optical body 1 can be produced by what is called an imprinting method. Hereinafter, a method for manufacturing the resin laminated optical body 1 will be described in detail on the basis of FIG. 10 to FIG. 14. Note that in the example of FIG. 10 to FIG. 14, the optical base material 10 is a double-convex lens.

### (4-1. First step)

First, the optical base material 10 described above is prepared. For example, the optical base material 10 may be manufactured by a publicly-known molding method, or the optical base material 10 which is commercially available may be obtained.

### (4-2. Second step)

Then, as illustrated in FIG. 10, the optical base material 10 is set on an optical base material fixing jig 600. Then, the curved surface 11 (herein, the convex surface on one side) of the optical base material 10 is coated with an uncured curing resin using an applicator device 700. Accordingly, an uncured resin layer 20a is formed on the curved surface 11 of the optical base material 10. The type of the applicator device 700 is not particularly limited, and may be a spin coater, a dispenser, an ink jet device, or the like, for example. The type of the applicator device 700 should only be selected depending on the properties or the like of the uncured resin layer 20a. In order to adjust adhesion of the uncured resin layer 20a to the optical base material 10, viscosity of the uncured resin layer 20a, or the like, the optical base material 10 may be heated before or during coating processing. In addition, the uncured resin layer 20a may be subjected to heat treatment after coating processing depending on the type of the uncured resin layer 20a. Note that the applicator device 700 may be incorporated into a chamber device 500 which will be described later, or may be separate from the chamber device 500.

### (4-3. Third step)

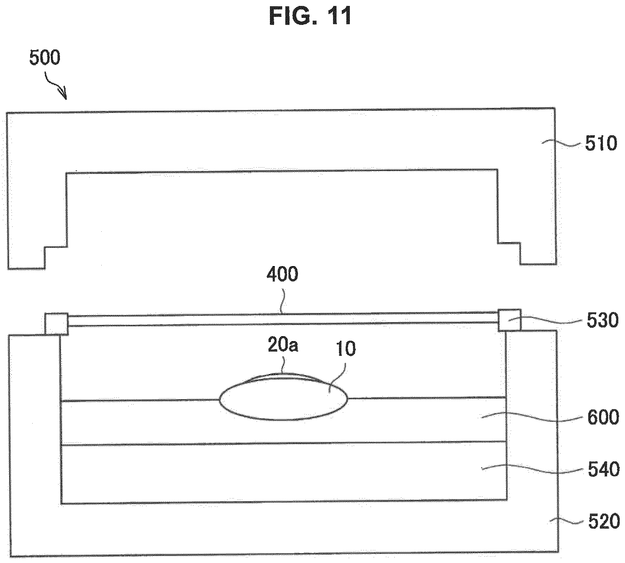

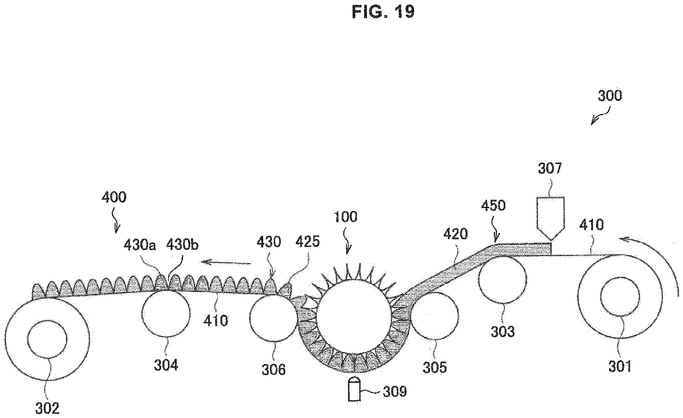

In a third step, a flexible master 400 illustrated in FIG. 11 is prepared. Herein, the flexible master 400 is a film having flexibility, and an inverted structure (hereinafter, also referred to as an "inverted concave-convex structure 430") of the micro concave-convex structure 50 is formed in the surface thereof. The flexible master 400 may also be referred to as a soft mold. The inverted concave-convex structure 430 is illustrated in FIG. 19. A method for manufacturing the flexible master 400 will be described later. The third step should only be performed at least before a fourth step which will be described later is performed.

### (4-4. Fourth step)

The fourth step includes a step of setting the optical base material and the flexible master, and an optical base material approaching step.

### (Step of setting optical base material and flexible master)

As illustrated in FIG. 11, the optical base material fixing jig 600 and the optical base material 10 are set in the chamber device 500. Herein, the chamber device 500 is a hollow device, and has an upper chamber box 510, a lower chamber box 520, a film fixing jig 530, and a movable table 540. The upper chamber box 510 is a box-shaped member which is open downward, and the lower chamber box 520 is a box-shaped member which is open upward.

A vacuum pump or pneumatic pump is connected to the upper chamber box 510 and the lower chamber box 520, and can bring the inner space of each of them into a negative pressure or positive pressure state. Herein, when bringing the space in each of the chamber boxes into the positive pressure state, any type of fluid is introduced into the space in each of the chamber boxes. Herein, examples of the fluid include gas such as air, but may be a liquid. A specific value of a pressure in each of the chamber boxes and a time for holding such a pressure can be adjusted arbitrarily. In addition, a UV irradiation device not shown is provided in the upper chamber box 510. The UV irradiation device may be provided in the lower chamber box 520. The UV intensity and irradiation time can be adjusted arbitrarily. Note that this example is premised on the uncured resin layer 20a being made of an ultraviolet-curing resin, whilst in a case where the uncured resin layer 20a is made of another type of curing resin, a device for curing the curing resin should only be provided in the upper chamber box 510 or the lower chamber box 520. In addition, each of the chamber boxes may be provided with a heating device. The film fixing jig 530 is a jig for fixing the flexible master 400 which will be described later to the open face of the lower chamber box 520. The movable table 540 is arranged in the lower chamber box 520, and can be moved vertically by a driving device not shown.

More specifically, the optical base material 10 is set on the movable table 540 together with the optical base material fixing jig 600. Then, the flexible master 400 is fixed to the film fixing jig 530. The open face of the lower chamber box 520 is closed by the flexible master 400. The flexible master 400 is fixed to the film fixing jig 530 in such a manner that the surface in which the inverted concave-convex structure 430 is formed faces the optical base material 10 side. In the illustrated example, the lower surface of the flexible master 400 corresponds to the surface in which the inverted concave-convex structure 430 is formed.

### (Optical base material approaching step)

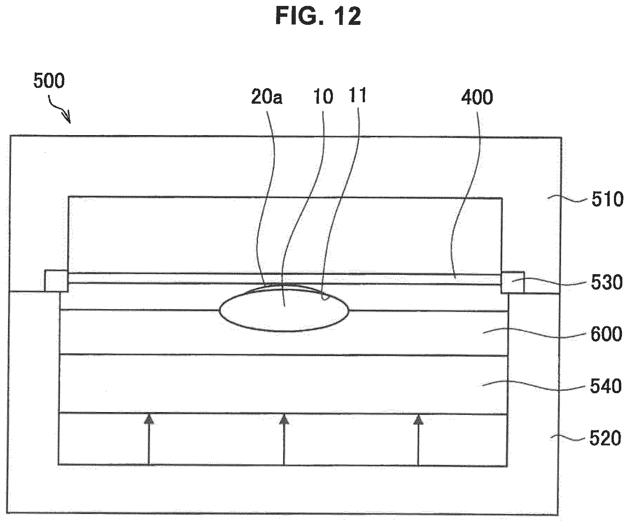

Then, as illustrated in FIG. 12, the upper chamber box 510 and the lower chamber box 520 are coupled to each other. Accordingly, the space in the chamber device 500 is sealed. On this occasion, the temperature in the chamber device 500 may be raised. Then, the space in the chamber device 500 is evacuated. Then, the movable table 540 is lifted to bring the flexible master 400 and the optical base material 10 into proximity to each other. The distance between the flexible master 400 and the optical base material 10 should only be adjusted as appropriate in accordance with the shape or the like of the optical base material 10. Arrows in FIG. 12 indicate the direction in which the movable table 540 is moved.

### (4-5. Fifth step (pressing step))

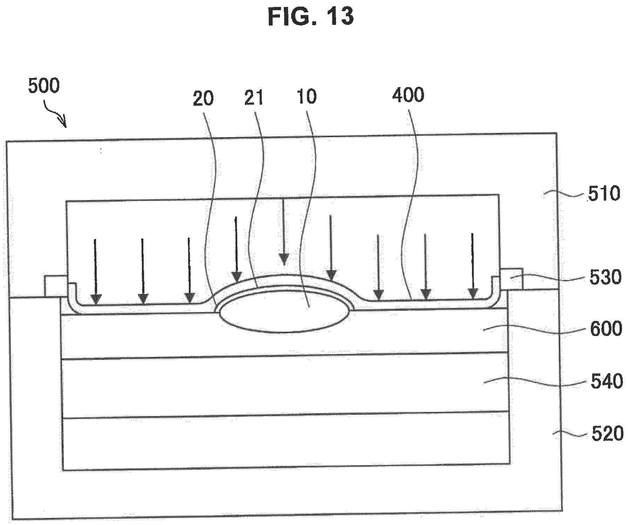

Then, a fluid is introduced into the upper chamber box 510 to bring the space in the upper chamber box 510 into the positive pressure state. A printing pressure is thereby applied to the flexible master 400. Arrows in FIG. 13 indicate the direction of the printing pressure. Through this step, the inverted concave-convex structure 430 of the flexible master 400 is pressed against the uncured resin layer 20a while deforming the flexible master 400. Accordingly, the uncured resin layer 20a spreads across the curved surface 11 (the convex surface on one side), and the uncured resin layer 20a enters between micro-convexities of the inverted concave-convex structure 430. Herein, it is preferable not to leave a gap between the uncured resin layer 20a and the flexible master 400 whenever possible. This is because, if a gap is left, a phenomenon such as entry of air bubbles or insufficient transfer of the inverted concave-convex structure 430 to the resin layer 20 is likely to occur.

### (4-6. Sixth step (curing step))

Then, the uncured resin layer 20a is cured in this state. Specifically, by irradiating the uncured resin layer 20a with ultraviolet rays, the uncured resin layer 20a made of an ultraviolet-curing resin is cured. Accordingly, the uncured resin layer 20a becomes the resin layer 20, and the inverted concave-convex structure 430 is transferred to the surface of the resin layer 20. That is, an inverted structure of the inverted concave-convex structure 430, that is, the micro concave-convex structure 50, is formed in the surface 21 of the resin layer 20. Through the above steps, the resin laminated optical body 1 is produced.

### (4-7. Seventh step (separation step))

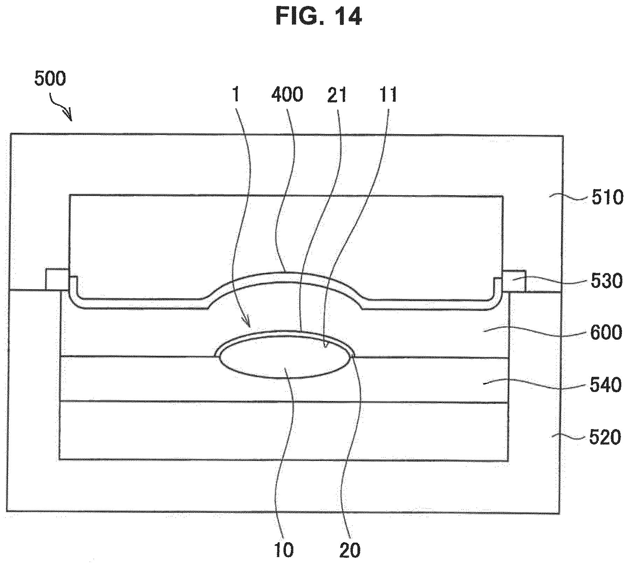

Then, as illustrated in FIG. 14, the movable table 540 is moved down to separate the resin laminated optical body 1 from the flexible master 400. Note that, in this step, a separation assisting step for promoting separation of the flexible master 400 and the resin laminated optical body 1 may be performed. Examples of such a separation assisting step include inserting a blade between the flexible master 400 and the resin laminated optical body 1, blowing gas such as air between the flexible master 400 and the resin laminated optical body 1, and the like.

Thereafter, the space in the chamber device 500 is brought into an atmospheric pressure state, and the upper chamber box 510 is detached. Then, the flexible master 400 and the resin laminated optical body 1 are taken out from the lower chamber box 520. Note that further ultraviolet irradiation treatment may be performed for the purpose of promoting curing of the resin layer 20, or heat treatment may be performed for the purpose of relieving stress in the resin layer 20.

Through the above steps, the resin layer 20 can be formed on the curved surface 11 on one side of the optical base material 10. The resin layer 20 may also be formed on the curved surface on the opposite side according to necessity through steps similar to those described above.

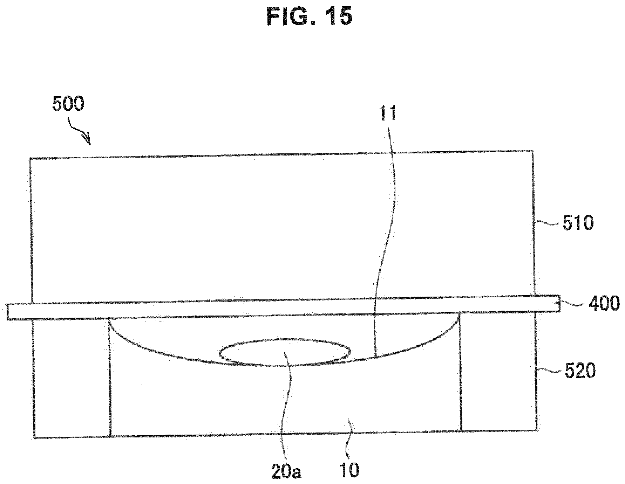

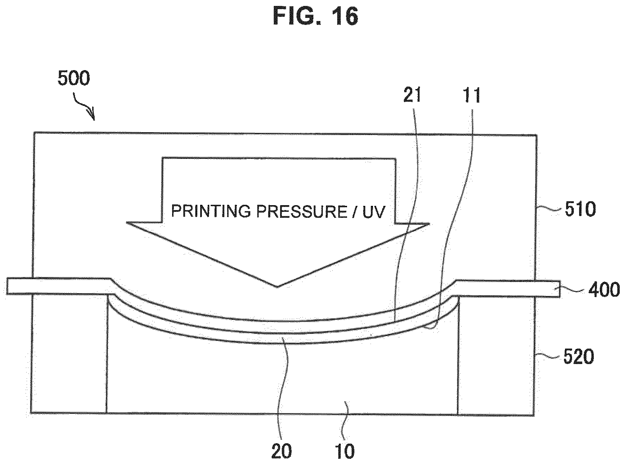

Note that, in a case where the optical base material 10 is a concave lens, the resin laminated optical body 1 can also be produced through steps similar to those described above. An overview of steps is illustrated in FIG. 15 and FIG. 16. As illustrated in FIG. 15, the uncured resin layer 20a is formed on the curved surface 11 of the optical base material 10. Then, the optical base material 10 and the flexible master 400 are set in the chamber device 500. Then, the flexible master 400 and the optical base material 10 are brought closer to each other. Then, as illustrated in FIG. 16, a printing pressure is applied to the flexible master 400. An arrow in FIG. 16 indicates the direction of the printing pressure. Through this step, the inverted concave-convex structure 430 of the flexible master 400 is pressed against the uncured resin layer 20a while deforming the flexible master 400. Accordingly, the uncured resin layer 20a spreads across the curved surface 11, and the uncured resin layer 20a enters between the micro-convexities of the inverted concave-convex structure 430. Herein, it is preferable not to leave a gap between the uncured resin layer 20a and the flexible master 400 whenever possible. In this state, the uncured resin layer 20a is cured. Specifically, the uncured resin layer 20a is irradiated with ultraviolet rays. Accordingly, the uncured resin layer 20a becomes the resin layer 20, and the inverted concave-convex structure 430 is transferred to the surface 21 of the resin layer 20. As a result, an inverted structure of the inverted concave-convex structure 430, that is, the micro concave-convex structure 50, is formed in the surface 21 of the resin layer 20. Through the above steps, the resin laminated optical body 1 is produced.

Then, the resin laminated optical body 1 is separated from the flexible master 400, and the flexible master 400 and the resin laminated optical body 1 are taken out from the chamber device 500.

Through the above steps, the resin layer 20 can be formed on the curved surface 11 on one side of the optical base material 10. The resin layer 20 may also be formed on the curved surface on the opposite side according to necessity through steps similar to those described above. According to the method for manufacturing the resin laminated optical body 1 described above, the resin layer 20 can be easily formed on the curved surface 11 of the optical base material 10.

### <5. Method for manufacturing light source unit>

Next, a method for manufacturing the light source unit 30 will be described. The light source unit 30 is also produced by a manufacturing method which is similar to that of the resin laminated optical body 1, but differs from the method for manufacturing the resin laminated structure 1 in that a step of having the light source 31 contained in the light source unit 30 is added. Herein, examples of a method of having the light source 31 contained in the light source unit 30 include a method of having the light source 31 contained in the optical base material 32 in advance. In this method, by directly charging resin onto the light source 31 by forming such as molding, the light source 31 is embedded into the optical base material 32. This optical base material 32 is subjected to the second and subsequent steps described above to produce the light source unit 30. Another method for having the light source 31 contained in the light source unit 30 is the following method. That is, the optical base material 32 separate from the light source 31 is subjected to the first step to the separation step described above to form the resin layer 40 on the optical base material 32. Then, the optical base material 32 with the resin layer 40 formed thereon is placed on the light source 31. The light source unit 30 including the light source 31 is thereby produced. According to the method for manufacturing the light source unit 30 as described above, the resin layer 40 can easily be formed on the curved surface 33 of the optical base material 32.

### <6. Detailed configuration of flexible master and manufacturing method>

Next, a detailed configuration of the flexible master 400 and a method for manufacturing the same will be described. As illustrated in FIG. 19, the flexible master 400 includes a flexible base material 410, and a resin layer 425 formed on a surface of the flexible base material 410. The flexible base material 410 is a planar base material having flexibility. Examples of the material constituting the flexible base material 410 include acrylic resins (such as poly methyl methacrylate), polycarbonate, polyethylene terephthalate (PET; note that the properties of PET are not particularly specified, and the PET may be amorphous or stretched), triacetyl cellulose (TAC), polyethylene, polypropylene, polycarbonate, cycloolefin polymers, cycloolefin copolymers, vinyl chloride, and the like.

The resin layer 425 includes a curing resin. The type of curing resin is not particularly restricted, and may be a curing resin similar to the curing resin constituting the resin layer 20, for example. The inverted concave-convex structure 430 is formed in the resin layer 425. The inverted concave-convex structure 430 includes large numbers of micro-convexities 430a and micro-concavities 430b.

Next, the method for manufacturing the flexible master 400 will be described. The method for manufacturing the flexible master 400 includes a first master producing step, second master producing step, and first master producing step. In the first master producing step, a transfer mold having an inverted structure of the inverted concave-convex structure 430 is produced. In the second master producing step, an uncured resin layer 420 is formed on the surface of the flexible base material 410. In the third master producing step, the uncured resin layer 420 is cured, and the concave-convex structure of the transfer mold is transferred to the resin layer 425 after curing.

### (6-1. First master producing step)

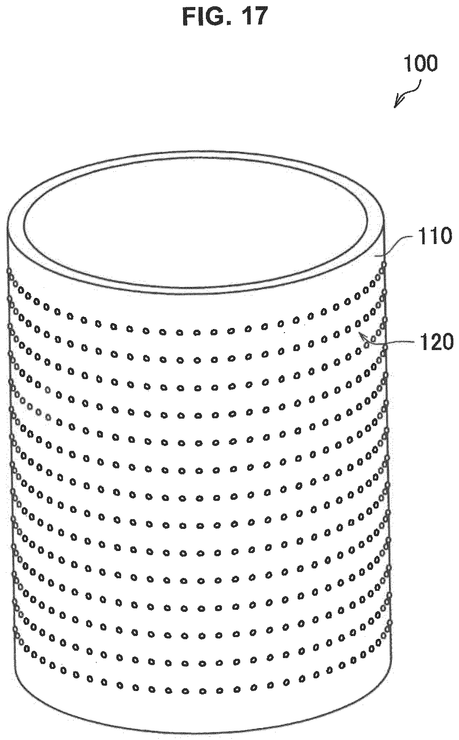

The first master producing step is a step of producing a transfer mold having the inverted structure of the inverted concave-convex structure 430. The transfer mold is a master 100 illustrated in FIG. 17, for example.

### (6-1-1. Configuration of master)

The configuration of the master 100 will now be described. The master 100 has a cylindrical shape. The master 100 may also have a round columnar shape, or another shape (for example, a planar shape). However, in the case where the master 100 has a round columnar or cylindrical shape, a concave-convex structure (that is, a master concave-convex structure) 120 of the master 100 can be transferred seamlessly to a resin base material or the like by a roll-to-roll method. The inverted concave-convex structure 430 can thereby be formed in the surface of the flexible base material 410 with high production efficiency. From such a perspective, the shape of the master 100 preferably has a cylindrical shape or a round columnar shape.

The master 100 includes a master base material 110, and the master concave-convex structure 120 formed in the circumferential surface of the master base material 110. The master base material 110 is a glass body, for example, and specifically is formed from quartz glass. However, the master base material 110 is not particularly limited insofar as the SiO₂ purity is high, and may also be formed from a material such as fused quartz glass or synthetic quartz glass. The master base material 110 may also be a laminate of the above materials on a metal matrix, or a metal matrix (for example, Cu, Ni, Cr, Al). The shape of the master base material 110 is a cylindrical shape, but may also be a round columnar shape, or another shape. However, as described above, the master base material 110 preferably has a cylindrical shape or a round columnar shape. The master concave-convex structure 120 has an inverted structure of the inverted concave-convex structure 430.

### (6-1-2. Method for manufacturing master)

Next, a method for manufacturing the master 100 will be described. First, a base material resist layer is formed (deposited) on the master base material 110. Herein, the resist material constituting the base material resist layer is not particularly limited, and may be either an organic resist material or an inorganic resist material. Examples of organic resist materials include novolac-type resist and chemically-amplified resist. In addition, examples of inorganic resist materials include metallic oxides including one or multiple types of transition metals such as tungsten (W) or molybdenum (Mo). Other examples of inorganic resist materials include Cr, Au, and the like. However, in order to conduct thermal reaction lithography, the base material resist layer preferably is formed from a thermo-reactive resist including a metallic oxide.

In the case of using an organic resist material for the base material resist layer, the base material resist layer may be formed on the master base material 110 by using a process such as spin coating, slit coating, dip coating, spray coating, or screen printing. Alternatively, in the case of using an inorganic resist material for the base material resist layer, the base material resist layer may be formed using sputtering. An organic resist material and an inorganic resist material may also be used together.

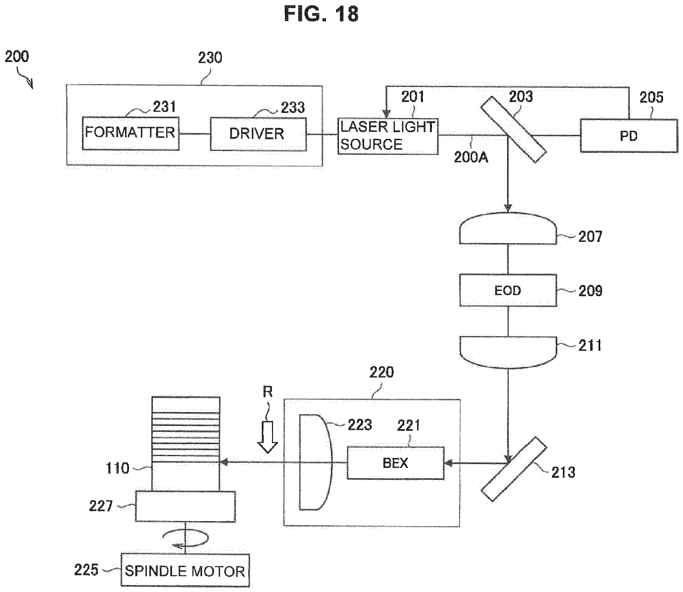

Next, by exposing part of the base material resist layer with an exposure device 200 (see FIG. 18), a latent image is formed on the base material resist layer. Specifically, the exposure device 200 modulates laser light 200A, and irradiates the base material resist layer with the laser light 200A. Consequently, part of the base material resist layer irradiated with the laser light 200A denatures, and thus a latent image corresponding to the master concave-convex structure 120 can be formed in the base material resist layer.

Next, by dripping a developing solution onto the base material resist layer in which the latent image is formed, the base material resist layer is developed. Accordingly, a concave-convex structure is formed in the base material resist layer. Subsequently, by etching the master base material 110 and the base material resist layer using the base material resist layer as a mask, the master concave-convex structure 120 is formed on the master base material 110. Note that although the etching method is not particularly limited, dry etching that is vertically anisotropic is preferable. For example, reactive ion etching (RIE) is preferable. Through the above steps, the master 100 is produced. The etching may be wet etching.

### (6-1-3. Configuration of exposure device)

Next, the configuration of the exposure device 200 will be described on the basis of FIG. 18. The exposure device 200 is a device that exposes the base material resist layer. The exposure device 200 includes a laser light source 201, a first mirror 203, a photodiode (PD) 205, a deflecting optical system, a control mechanism 230, a second mirror 213, a movable optical table 220, a spindle motor 225, and a turntable 227. In addition, the master base material 110 is placed on the turntable 227 and is capable of rotating.

The laser light source 201 is a light source that emits the laser light 200A, and is a device such as a solid-state laser or a semiconductor laser, for example. The wavelength of the laser light 200A emitted by the laser light source 201 is not particularly limited, but may be a wavelength in the blue light band from 400 nm to 500 nm, for example. In addition, it is sufficient for the spot diameter of the laser light 200A (the diameter of the spot radiated onto the resist layer) to be smaller than the diameter of the open face of a concavity of the master concave-convex structure 120, such as approximately 200 nm, for example. The laser light 200A emitted from the laser light source 201 is controlled by the control mechanism 230.

The laser light 200A emitted from the laser light source 201 advances directly in a collimated beam, reflects off the first mirror 203, and is guided to the deflecting optical system.

The first mirror 203 is made up of a polarizing beam splitter, and has a function of reflecting one polarized component, and transmitting the other polarized component. The polarized component transmitted through the first mirror 203 is detected by the photodiode 205 and photoelectrically converted. In addition, a photodetection signal photoelectrically converted by the photodiode 205 is input into the laser light source 201, and the laser light source 201 conducts phase modulation of the laser light 200A on the basis of the input photodetection signal.

In addition, the deflecting optical system includes a condenser lens 207, an electro-optic deflector (EOD) 209, and a collimator lens 211.

In the deflecting optical system, the laser light 200A is condensed onto the electro-optic deflector 209 by the condenser lens 207. The electro-optic deflector 209 is an element capable of controlling the radiation position of the laser light 200A. With the electro-optic deflector 209, the exposure device 200 is also capable of changing the radiation position of the laser light 200A guided onto the movable optical table 220 (what is called a Wobble mechanism). After the radiation position is adjusted by the electro-optic deflector 209, the laser light 200A is converted back into a collimated beam by the collimator lens 211. The laser light 200A exiting the deflecting optical system is reflected by the second mirror 213, and guided level with and parallel to the movable optical table 220.

The movable optical table 220 includes a beam expander (BEX) 221 and an objective lens 223. The laser light 200A guided to the movable optical table 220 is shaped into a desired beam shape by the beam expander 221, and then radiated via the objective lens 223 onto the base material resist layer formed on the master base material 110. In addition, the movable optical table 220 moves by one feed pitch (track pitch) in the direction of the arrow R (feed pitch direction) every time the master base material 110 undergoes one rotation. The master base material 110 is placed on the turntable 227. The spindle motor 225 causes the turntable 227 to rotate, thereby causing the master base material 110 to rotate. Accordingly, the laser light 200A is made to scan over the base material resist layer. Herein, a latent image of the base material resist layer is formed along the scanning direction of the laser light 200A.

In addition, the control mechanism 230 includes a formatter 231 and a driver 233, and controls the irradiation with the laser light 200A. The formatter 231 generates a modulation signal that controls the irradiation with the laser light 200A, and the driver 233 controls the laser light source 201 on the basis of the modulation signal generated by the formatter 231. The irradiation of the master base material 110 with the laser light 200A is thereby controlled.

The formatter 231 generates a control signal for irradiating the base material resist layer with the laser light 200A, on the basis of an input image depicting an arbitrary pattern to be drawn on the base material resist layer. Specifically, first, the formatter 231 acquires an input image depicting an arbitrary draw pattern to be drawn on the base material resist layer. The input image is an image corresponding to a development view of the outer circumferential surface of the base material resist layer, in which the outer circumferential surface of the base material resist layer is cut in the axial direction and expanded in a single plane. In the development view, an image corresponding to the circumferential shape of the master 100 is drawn. This image illustrates the inverted structure of the inverted concave-convex structure 430. Note that a transfer film to which the master concave-convex structure 120 of the master 100 has been transferred may be produced, and the inverted concave-convex structure 430 may be formed on the flexible base material 410 using this transfer film as a transfer mold. In this case, the master concave-convex structure 120 has the same concave-convex structure as the inverted concave-convex structure 430.

Next, the formatter 231 partitions the input image into sub-regions of a predetermined size (for example, partitions the input image into a lattice), and determines whether or not the concavity draw pattern (in other words, a pattern corresponding to the concavities of the master 100) is included in each of the sub-regions. Subsequently, the formatter 231 generates a control signal to perform control to irradiate with the laser light 200A each sub-region determined to include the concavity draw pattern. This control signal (that is, the exposure signal) preferably is synchronized with the rotation of the spindle motor 225, but does not have to be synchronized. In addition, the control signal and the rotation of the spindle motor 225 may also be resynchronized every time the master base material 110 performs one rotation. Furthermore, the driver 233 controls the output of the laser light source 201 on the basis of the control signal generated by the formatter 231. The irradiation of the base material resist layer with the laser light 200A is thereby controlled. Note that the exposure device 200 may also perform a known exposure control process, such as focus servo and positional correction of the irradiation spot of the laser light 200A. The focus servo may use the wavelength of the laser light 200A, or use another wavelength for reference.

In addition, the laser light 200A radiated from the laser light source 201 may be radiated onto the base material resist layer after being split into multiple optical systems. In this case, multiple irradiation spots are formed on the base material resist layer. In this case, when the laser light 200A emitted from one optical system reaches the latent image formed by another optical system, exposure may be ended.

Consequently, according to the present embodiment, a latent image corresponding to the draw pattern of the input image can be formed in the resist layer. Then, by developing the resist layer and using the developed resist layer as a mask to etch the master base material 110 and the base material resist layer, the master concave-convex structure 120 corresponding to the draw pattern of the input image is formed on the master base material 110. In other words, an arbitrary master concave-convex structure 120 corresponding to a draw pattern can be formed. Consequently, if a draw pattern in which the inverted structure of the inverted concave-convex structure 430 is drawn is prepared as the draw pattern, the master concave-convex structure 120 having the inverted structure of the inverted concave-convex structure 430 can be formed.

Note that the exposure device usable in the present embodiment is not limited to the exposure device 200, and any type of exposure device having functions similar to those of the exposure device 200 may be used.

### (6-1-4. Method for forming concave-convex structure using master)

Next, an example of a method for forming the inverted concave-convex structure 430 using the master 100 will be described with reference to FIG. 19. The inverted concave-convex structure 430 can be formed on the flexible base material 410 by a roll-to-roll transfer device 300 using the master 100. In the transfer device 300 illustrated in FIG. 19, the curing resin constituting the resin layer 425 is what is called an ultraviolet-curing resin. The second and third master producing steps described above are performed using the transfer device 300.

The transfer device 300 includes the master 100, a base material supply roll 301, a take-up roll 302, guide rolls 303 and 304, a nip roll 305, a separation roll 306, an applicator device 307, and a light source 309.

The base material supply roll 301 is a roll around which the long-length flexible base material 410 is wound in a roll, while the take-up roll 302 is a roll that takes up the flexible master 400. In addition, the guide rolls 303 and 304 are rolls that transport the flexible base material 410. The nip roll 305 is a roll that puts the flexible base material 410 on which the uncured resin layer 420 has been laminated, or in other words a transfer film 450, in close contact with the master 100. The separation roll 306 is a roll that separates the flexible master 400 from the master 100.

The applicator device 307 includes applicator means such as a coater, and applies an uncured curing resin to the flexible base material 410, and forms the uncured resin layer 420. The applicator device 307 may be a device such as a gravure coater, a wire bar coater, or a die coater, for example. In addition, the light source 309 is a light source that emits light of a wavelength at which the uncured resin can be cured, and may be a device such as an ultraviolet lamp, for example.

In the transfer device 300, first, the flexible base material 410 is delivered continuously from the base material supply roll 301 via the guide roll 303. Note that partway through the delivery, the base material supply roll 301 may also be changed to a base material supply roll 301 of a separate lot. The uncured resin is applied by the applicator device 307 to the delivered flexible base material 410, and the uncured resin layer 420 is laminated onto the flexible base material 410. The transfer film 450 is thereby prepared. The transfer film 450 is put into close contact with the master 100 by the nip roll 305. The light source 309 irradiates with ultraviolet rays the uncured resin layer 420 put in close contact with the master 100, thereby curing the uncured resin layer 420. Accordingly, the uncured resin layer 420 becomes the resin layer 425, and the master concave-convex structure 120 is transferred to the surface of the resin layer 425. In other words, the inverted structure of the master concave-convex structure 120, that is, the inverted concave-convex structure 430, is formed in the surface of the resin layer 425. Next, the flexible base material 410 in which the inverted concave-convex structure 430 has been formed is separated from the master 100 by the separation roll 306. Next, the flexible base material 410 in which the inverted concave-convex structure 430 has been formed is taken up by the take-up roll 302 via the guide roll 304. Note that the master 100 may be oriented vertically or oriented horizontally, and a mechanism that corrects the angle and eccentricity of the master 100 during rotation may also be provided separately. For example, an eccentric tilt mechanism may be provided in a chucking mechanism. The transfer may also be performed by pressure transfer.

In this way, in the transfer device 300, the circumferential shape of the master 100 is transferred to the transfer film 450 while transporting the transfer film 450 roll-to-roll. Accordingly, the inverted concave-convex structure 430 is formed on the flexible base material 410.

Note that in the case of using a thermoplastic resin film as the flexible base material 410, the applicator device 307 and the light source 309 become unnecessary. In this case, a heater device is disposed farther upstream than the master 100. The flexible base material 410 is heated and softened by this heater device, and thereafter, the flexible base material 410 is pressed against the master 100. Accordingly, the master concave-convex structure 120 formed on the circumferential surface of the master 100 is transferred to the flexible base material 410. Note that a film including a resin other than a thermoplastic resin may be used as the flexible base material 410, and the flexible base material 410 and a thermoplastic resin film may be laminated. In this case, the laminated film is pressed against the master 100 after being heated by the heater device. Consequently, the transfer device 300 is capable of continuously producing a transfer product in which the inverted concave-convex structure 430 has been formed on the flexible base material 410.

In addition, a transfer film to which the master concave-convex structure 120 of the master 100 has been transferred may be produced, and the inverted concave-convex structure 430 may be formed on the flexible base material 410 using this transfer film as a transfer mold. A transfer film to which the concave-convex structure of the transfer film has been transferred further may also be used as a transfer mold. In this case, the master concave-convex structure 120 is formed such that the micro concave-convex structure to be formed in the resin layer 425 is an inverted concave-convex structure. In addition, the master 100 may be duplicated by electroforming, thermal transfer, or the like, and this duplicate may be used as a transfer mold. Furthermore, the shape of the master 100 is not necessarily limited to a roll shape, and may also be a planar master. Besides the method for irradiating resist with the laser light 200A, various processing methods can be selected, such as semiconductor exposure using a mask, electron beam lithography, machining, or anodic oxidation.

### <7. Exemplary application of resin laminated optical body and light source unit>

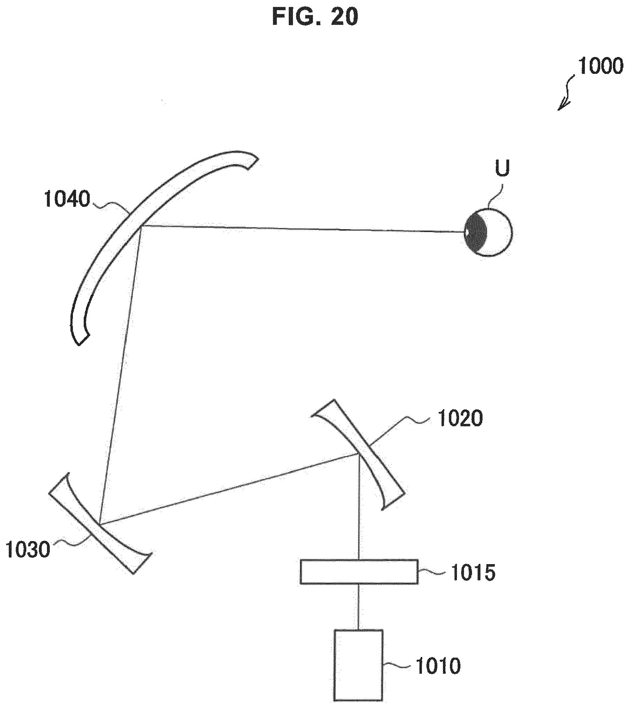

Next, an exemplary application of the resin laminated optical body 1 and the light source unit 30 will be described on the basis of FIG. 20 to FIG. 26. In the example illustrated in FIG. 20, the resin laminated optical body 1 and the light source unit 30 are applied to a projection image display device (that is, image projecting device) 1000. The image display device 1000 has a transmissive diffusing screen structure. The image display device 1000 includes a light irradiation device 1010, a liquid crystal panel 1015, mirrors 1020, 1030, and a display 1040. Light radiated from the light irradiation device 1010 passes through the liquid crystal panel 1015, and is sequentially reflected off the mirrors 1020, 1030, and the display 1040 to enter the field of view of a user (person U). That is, an image displayed on the liquid crystal panel 1015 is displayed on the display 1040 as a virtual image. Accordingly, the user can visually recognize an image (virtual image) displayed on the display 1040.

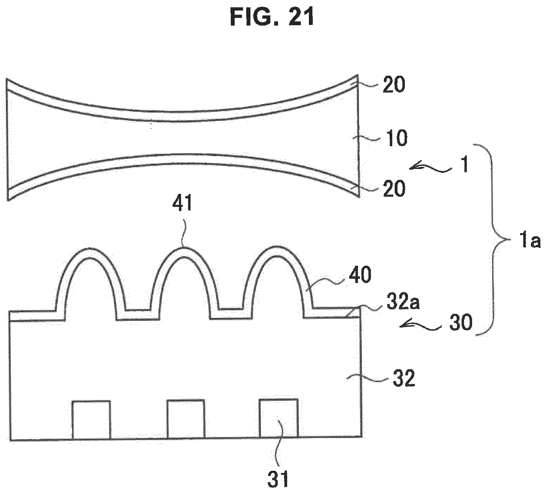

The light irradiation device 1010 has an optical unit 1a illustrated in FIG. 21. The optical unit 1a has the resin laminated optical body 1 and the light source unit 30. In the example of FIG. 21, the optical base material 10 is a double-concave lens, and the resin layers 20 are formed on both the front and rear surfaces of the optical base material 10. The light sources 31 in the light source unit 30 are arranged as a matrix, and each of the light sources 31 emit light in a desired manner, so that a desired image can be displayed on the display 1040. The display 1040 is a wind shield, combiner, or the like, for example. In a case where the image display device 1000 is mounted on a vehicle, for example, the display 1040 is a wind shield.

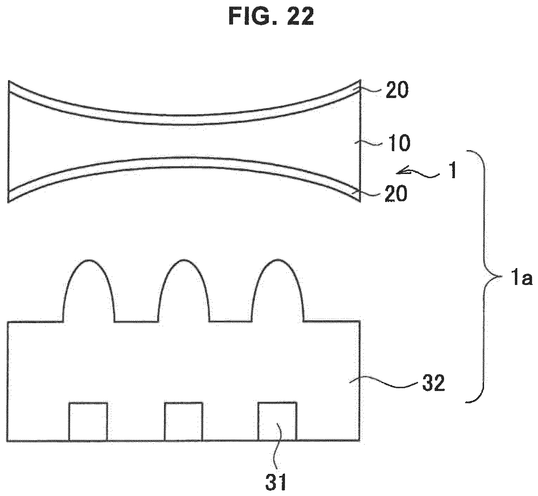

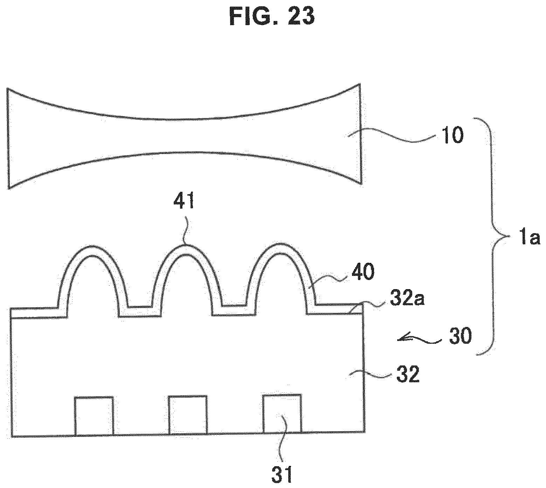

The configuration of the optical unit 1a is not limited to the example of FIG. 21. For example, the resin laminated optical body 1 may be any of the examples indicated in FIG. 1 to FIG. 8. Furthermore, either of the resin laminated optical body 1 and the light source unit 30 may be replaced by a conventional configuration. As illustrated in FIG. 22, for example, the resin layer 40 of the light source unit 30 may be omitted. In addition, as illustrated in FIG. 23, the resin laminated optical body 1 may be replaced by the optical base material 10 (that is, a conventional optical lens).

Furthermore, at least one of the mirrors 1020 and 1030 may be replaced by the resin laminated optical body 1.

According to the example of FIG. 20, the light irradiation device 1010 can be reduced in size since the optical unit 1a is contained in the light irradiation device 1010, and eventually, the image display device 1000 can be reduced in size. By replacing at least one of the mirrors 1020 and 1030 by the resin laminated optical body 1, further size reduction of the image display device 1000 can be expected. Furthermore, since interface reflection is less likely to occur between the resin layer 20 and the optical base material 10 or between the resin layer 40 and the optical base material 32, the light emission quality, or specifically, the quality of a displayed image, can be improved (for example, luminance unevenness is reduced, or the like).

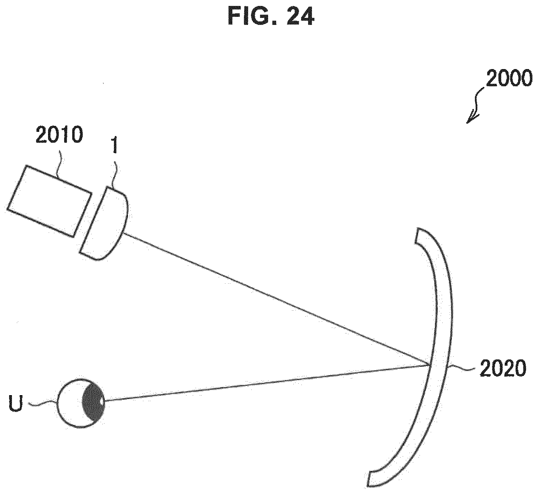

In the example of FIG. 24, the resin laminated optical body 1 is applied to a projection image display device (that is, image projecting device) 2000. The image display device 2000 has a transmissive diffusing screen structure. The image display device 2000 includes a light irradiation device 2010 and a display 2020. The light irradiation device 2010 is a raster scanning laser irradiation device, for example, and light radiated from the light irradiation device 2010 passes through the resin laminated optical body 1 to enter the display 2020. The light entered the display 2020 is reflected off the display 2020 to enter the field of view of the user. Accordingly, the user can visually recognize an image (virtual image) displayed on the display 2020. The display 2020 is a combiner or the like, for example.

In this manner, in the example of FIG. 24, the resin laminated optical body 1 is arranged on the optical path of light output from the light irradiation device 2010. In the example of FIG. 24, the resin laminated optical body 1 illustrated in FIG. 1 is arranged, whilst any of the other resin laminated optical bodies 1 indicated in FIG. 3 to FIG. 8 may be arranged.

According to the example of FIG. 24, the image display device 2000 can be reduced in size since the resin laminated optical body 1 is contained in the image display device 2000. Furthermore, since interface reflection is less likely to occur between the resin layer 20 and the optical base material 10, the light emission quality, or specifically, the quality of a displayed image, can be improved (for example, luminance unevenness is reduced, or the like).

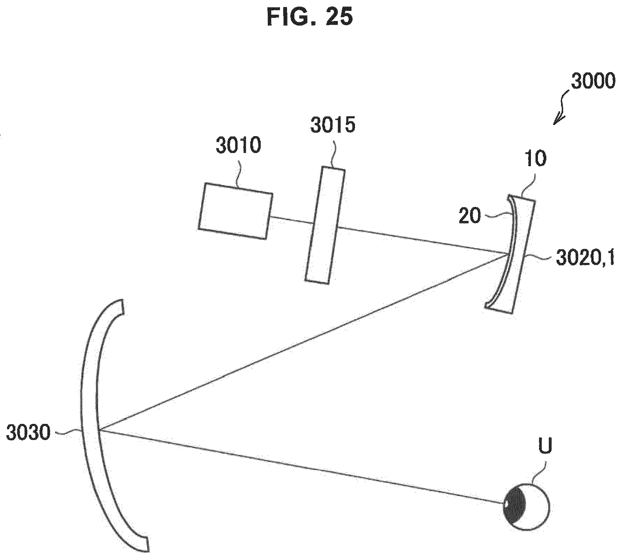

In the example of FIG. 25, the resin laminated optical body 1 is applied to a projection image display device (that is, image projecting device) 3000. The image display device 3000 has a reflective diffusion screen structure. The image display device 3000 includes a light irradiation device 3010, a liquid crystal panel 3015, a mirror 3020, and a display 3030. The light irradiation device 3010 may be a laser light source that outputs laser light, or a LED light source, for example. Light radiated from the light irradiation device 3010 passes through the liquid crystal panel 3015, and is reflected off the mirror 3020 and the display 3030 to enter the field of view of the user. That is, an image displayed on the liquid crystal panel 3015 is displayed on the display 3030 as a virtual image. Accordingly, the user can visually recognize an image (virtual image) displayed on the display 3030.

In the example of FIG. 25, the mirror 3020 is implemented by the resin laminated optical body 1. The display 3030 is a wind shield, combiner, or the like, for example. The configuration of the resin laminated optical body 1 is not limited to the example of FIG. 25, but may be any of the other resin laminated optical bodies 1 indicated in FIG. 1 to FIG. 8. In addition, the light irradiation device 3010 may be implemented by the light irradiation device 1010 described above.

According to the example of FIG. 25, the image display device 3000 can be reduced in size since the mirror 3020 is implemented by the resin laminated optical body 1. Furthermore, since interface reflection is less likely to occur between the resin layer 20 and the optical base material 10, the light emission quality, or specifically, the quality of a displayed image, can be improved (for example, luminance unevenness is reduced, or the like).

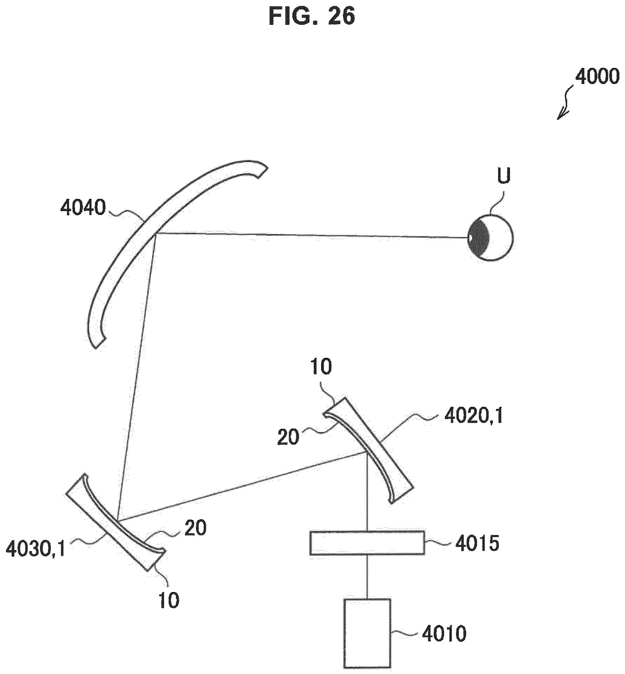

In the example of FIG. 26, the resin laminated optical body 1 is applied to a projection image display device (that is, image projecting device) 4000. The image display device 4000 has a reflective diffusion screen structure. That is, the image display device 4000 includes a light irradiation device 4010, a liquid crystal panel 4015, mirrors 4020, 4030, and a display 4040. The light irradiation device 4010 may be a laser light source that outputs laser light or a LED light source, for example. Light radiated from the light irradiation device 4010 passes through the liquid crystal panel 4015, and is reflected off the mirrors 4020, 4030, and the display 4040 to enter the field of view of the user. That is, an image displayed on the liquid crystal panel 4015 is displayed on the display 4040 as a virtual image. Accordingly, the user can visually recognize an image (virtual image) displayed on the display 4040.

In the example of FIG. 26, the mirrors 4020 and 4030 are implemented by the resin laminated optical body 1. The display 4040 is a wind shield, combiner, or the like, for example. The configuration of the resin laminated optical body 1 is not limited to the example of FIG. 26, but may be any of the other resin laminated optical bodies 1 indicated in FIG. 1 to FIG. 8. In addition, at least one of the mirrors 4020 and 4030 may be implemented by a conventional mirror.

According to the example of FIG. 26, the image display device 4000 can be reduced in size since the mirrors 4020 and 4030 are implemented by the resin laminated optical body 1.

### [Examples]

### <1. Example 1>

Next, examples of the present invention will be described. In Examples 1 to 18 and Comparative Example 1, tests for evaluating properties of the light irradiation device 1010 illustrated in FIG. 20 were conducted. Hereinafter, the present example will be described in detail.

### (1-1. Production of flexible master)

The first to third master producing steps described above were performed to produce the flexible master 400 in which the inverted concave-convex structure 430 was a light diffusing structure or moth-eye structure. More specifically, a PET film having a thickness of 75 µm was prepared as the flexible base material 410. Then, the resin layer 425 was formed on one surface of the flexible base material 410 using the transfer device 300 illustrated in FIG. 19. Herein, the ultraviolet-curing acrylic resin composition "SK1120" made by Dexerials Corporation was used as the ultraviolet-curing resin. The average cycle of the inverted concave-convex structure 430 constituting the moth-eye structure was 250 nm, and the height difference was 200 nm. In the inverted concave-convex structure 430 constituting the light diffusing structure, the average interval between the micro concavities 50b and 50b and the average interval between the micro convexities 50a and 50a were 48 µm, and the height difference was 1.2 µm.

### (1-2. Preparation of optical base material)

A plano-concave lens was prepared as the optical base material 10 for lens (hereinafter, also referred to as an "optical base material 10-1"). Herein, the diameter (φ) of the optical base material 10-1 was 50 mm, the material was BK7, and the radius of curvature was 102 mm. In addition, the refractive index of the optical base material 10-1 was 1.52. Herein, the radius of curvature was measured by "Three-dimensional measuring equipment UA3P" made by Panasonic Corporation, and the refractive index was measured by the Abbe refractometer made by ATAGO CO., LTD. Note that the refractive index was a refractive index corresponding to the wavelength of 587 nm.

Furthermore, as the material of the optical base material 32 for the light source unit 30, a cycloolefin polymer ("ZEONEX 480R" made by Zeon Corporation) was prepared.

### (1-3. Preparation of ultraviolet-curing resin)

As the ultraviolet-curing resin constituting the resin layer 20, an acrylic ultraviolet-curing resin having the following composition was prepared. The acrylic ultraviolet-curing resin when uncured had a viscosity (cP) of 1240 cP and a refractive index of 1.52. Herein, the viscosity was measured by the rotating viscometer made by Brookfield Engineering Laboratories, Inc., and the refractive index was measured by the Abbe refractometer made by ATAGO CO., LTD. after curing. The refractive index was a refractive index corresponding to the wavelength of 587 nm.
Monomer: ARONIX M305 made by Toagosei Co., Ltd.: 45 parts by mass
Oligomer: UV-1700 made by The Nippon Synthetic Chemical Industry Co., Ltd.: 20 parts by mass
Reactive diluent: DMAA made by KJ Chemicals Corporation: 30 parts by mass
Photopolymerization initiator: Irgacure 184: 5 parts by mass

### (1-4. Production of light source unit)

The first to sixth steps and the separation step described above were performed to produce the light source unit 30-1. Herein, the flexible master 400 (hereinafter, also referred to as a "flexible master 400-1") in which the inverted concave-convex structure 430 was a moth-eye structure was used as the flexible master 400. Furthermore, a white LED was used as the light source 31. In addition, by directly charging a cycloolefin polymer described above onto the light source 31 by molding, the light source 31 was embedded in the optical base material 32. The light source unit 30-1 was thereby produced. The thickness of the resin layer 40 was 3 µm. Note that, in all of the following examples, the thickness of the resin layer 40 was similar to that of Example 1.

### (1-5. Production of light diffuser panel)

Using the flexible master 400 (hereinafter, also referred to as a "flexible master 400-2") in which the inverted concave-convex structure 430 was a light diffusing structure and the ultraviolet-curing resin described above, a light diffuser panel was produced. Specifically, the ultraviolet-curing resin described above was applied onto an acrylic film to a thickness of 5 µm, and the flexible master 400-2 was bonded from above. By irradiating the ultraviolet-curing resin with ultraviolet rays in this state to separate the flexible master 400-2, the light diffuser panel was produced.

### (1-6. Measurement of total light transmittance and diffusion angle)

The optical base material 10-1 and the light diffuser panel were arranged in this order on the light emitting surface 32a of the light source unit 30-1 to produce the optical unit 1a. Herein, the curved surface 11 of the optical base material 10-1 was placed to face the light diffuser panel. Hereinafter, the curved surface 11 shall be a "front surface" of the optical base material 10-1, and the surface (the surface on the light source unit 30-1 side) opposite to the front surface shall be a "rear surface". Then, the light source 31 was caused to emit light to measure total light transmittance and diffusion angle of transmitted light having transmitted through the light diffuser panel. Herein, the total light transmittance is a ratio of an emission intensity of the transmitted light to an emission intensity of the light source 31, and the diffusion angle is an angle at which, when normalizing the light intensity of each light emission angle at a light intensity of vertical transmission (0°), the light intensity becomes half. The total light transmittance was measured using "HM-150" made by MURAKAMI COLOR RESEARCH LABORATORY CO., LTD. The diffusion angle was measured using "EZ-Contrast" made by ELDIM. A white collimating light source was used as the light source. The results are collectively shown in Table 1.

### <2. Example 2>

### (2-1. Production of resin laminated optical body)

The first to sixth steps and the separation step described above were performed using the flexible master 400-1 to form the resin layer 20 on the front surface of the optical base material 10-1. A resin laminated optical body 1-2 was thereby produced. A moth-eye structure was formed in the surface 21 of the resin layer 20 as the micro concave-convex structure 50. The thickness of the resin layer 20 was 5 µm. Note that, in all of the following examples, the thickness of the resin layer 20 was similar to that of Example 2.

### (2-2. Measurement of total light transmittance and diffusion angle)

The resin laminated optical body 1-2 and the light diffuser panel were arranged in this order on the light emitting surface 32a of the light source unit 30-1 to produce the optical unit 1a. The light diffuser panel was that used in Example 1. Then, the light source 31 was caused to emit light to measure the total light transmittance and diffusion angle of transmitted light having transmitted through the light diffuser panel. Measuring conditions were similar to those of Example 1. The results are collectively shown in Table 1.

### <3. Example 3>

### (3-1. Production of resin laminated optical body)

The first to sixth steps and the separation step described above were performed using the flexible master 400-1 to form the resin layer 20 on the rear surface of the optical base material 10-1. A resin laminated optical body 1-3 was thereby produced. A moth-eye structure was formed in the surface 21 of the resin layer 20 as the micro concave-convex structure 50.

### (3-2. Measurement of total light transmittance and diffusion angle)

The resin laminated optical body 1-3 and the light diffuser panel were arranged in this order on the light emitting surface 32a of the light source unit 30-1 to produce the optical unit 1a. The light diffuser panel was that used in Example 1. Then, the light source 31 was caused to emit light to measure the total light transmittance and diffusion angle of transmitted light having transmitted through the light diffuser panel. Measuring conditions were similar to those of Example 1. The results are collectively shown in Table 1.

### <4. Example 4>

### (4-1. Production of resin laminated optical body)

The first to sixth steps and the separation step described above were performed using the flexible master 400-1 to form the resin layers 20 on both the front and rear surfaces of the optical base material 10-1. A resin laminated optical body 1-4 was thereby produced. A moth-eye structure was formed in the surface 21 of the resin layer 20 as the micro concave-convex structure 50.

### (4-2. Measurement of total light transmittance and diffusion angle)

The resin laminated optical body 1-4 and the light diffuser panel were arranged in this order on the light emitting surface 32a of the light source unit 30-1 to produce the optical unit 1a. The light diffuser panel was that used in Example 1. Then, the light source 31 was caused to emit light to measure the total light transmittance and diffusion angle of transmitted light having transmitted through the light diffuser panel. Measuring conditions were similar to those of Example 1. The results are collectively shown in Table 1.

### <5. Comparative Example 1>

### (5-1. Measurement of total light transmittance and diffusion angle)

A light source unit 30-c1 was produced in which the light source 31 was contained in the optical base material 32. The light source unit 30-c1 was obtained by omitting the resin layer 40 from the light source unit 30-1 of Example 1. The optical base material 10-1 and the light diffuser panel were arranged in this order on the light emitting surface 32a of this light source unit 30-c1 to produce an optical unit. The light diffuser panel was that used in Example 1. Therefore, in the optical unit of Comparative Example 1, the resin layer according to the present embodiment was not formed on either the optical base material 10-1 or 32. Then, the light source 31 was caused to emit light to measure the total light transmittance and diffusion angle of transmitted light having transmitted through the light diffuser panel. Measuring conditions were similar to those of Example 1. The results are collectively shown in Table 1.

**[Table 1]**

| | | Comparative Example 1 | Example 1 | Example 2 | Example 3 | Example 4 |
|---|---|---|---|---|---|---|
| Diffuser panel | Separately placed/Integrated | Separately placed | Separately placed | Separately placed | Separately placed | Separately placed |
| Lens 2 | Front surface | Not processed | Not processed | Anti-reflective | Not processed | Anti-reflective |
| | Rear surface | Not processed | Not processed | Not processed | Anti-reflective | Anti-reflective |
| Lens 1 | | Not processed | Anti-reflective | Anti-reflective | Anti-reflective | Anti-reflective |
| Total light transmittance | | 75% | 79% | 83% | 83% | 87% |
| Diffusion angle | | 10° | 10° | 10° | 10° | 10° |

Note that, in Table 1, lenses 1 and 2 indicate the optical base materials 32 and 10-1, respectively. For the diffuser panel, "Separately placed" indicates that the optical base material 10-1 and the light diffuser panel are separate from each other. The term "Not processed" indicates that no resin layer is formed. The term "Anti-reflective" indicates that a moth-eye structure is formed.

### <6. Example 5>

### (6-1. Production of resin laminated optical body)

The first to sixth steps and the separation step described above were performed using the flexible master 400-2 to form the resin layer 20 on the front surface of the optical base material 10-1. A resin laminated optical body 1-5 was thereby produced. A light diffusing structure was formed in the surface 21 of the resin layer 20 as the micro concave-convex structure 50.

### (6-2. Measurement of total light transmittance and diffusion angle)

The resin laminated optical body 1-5 was arranged on the light emitting surface 32a of the light source unit 30-c1 to produce the optical unit 1a. Then, the light source 31 was caused to emit light to measure the total light transmittance and diffusion angle of transmitted light having transmitted through the resin laminated optical body 1-5. Measuring conditions were similar to those of Example 1. The results are collectively shown in Table 2.

### <7. Example 6>

### (7-1. Measurement of total light transmittance and diffusion angle)

The resin laminated optical body 1-5 was arranged on the light emitting surface 32a of the light source unit 30-1 to produce the optical unit 1a. Then, the light source 31 was caused to emit light to measure the total light transmittance and diffusion angle of transmitted light having transmitted through the resin laminated optical body 1-5. Measuring conditions were similar to those of Example 1. The results are collectively shown in Table 2.

### <8. Example 7>

### (8-1. Production of resin laminated optical body)

The first to sixth steps and the separation step described above were performed using the flexible master 400-2 to form the resin layer 20 on the rear surface of the optical base material 10-1. A resin laminated optical body 1-7 was thereby produced. A light diffusing structure was formed in the surface 21 of the resin layer 20 as the micro concave-convex structure 50.

### (8-2. Measurement of total light transmittance and diffusion angle)

The resin laminated optical body 1-7 was arranged on the light emitting surface 32a of the light source unit 30-c1 to produce the optical unit 1a. Then, the light source 31 was caused to emit light to measure the total light transmittance and diffusion angle of transmitted light having transmitted through the resin laminated optical body 1-7. Measuring conditions were similar to those of Example 1. The results are collectively shown in Table 2.

### <9. Example 8>

### (9-1. Measurement of total light transmittance and diffusion angle)

The resin laminated optical body 1-7 was arranged on the light emitting surface 32a of the light source unit 30-1 to produce the optical unit 1a. Then, the light source 31 was caused to emit light to measure the total light transmittance and diffusion angle of transmitted light having transmitted through the resin laminated optical body 1-7. Measuring conditions were similar to those of Example 1. The results are collectively shown in Table 2.

### <10. Example 9>

### (10-1. Production of resin laminated optical body)

The first to sixth steps and the separation step described above were performed using the flexible master 400-2 to form the resin layers 20 on both the front and rear surfaces of the optical base material 10-1. A resin laminated optical body 1-9 was thereby produced. A light diffusing structure was formed in the surface 21 of the resin layer 20 as the micro concave-convex structure 50.

### (10-2. Measurement of total light transmittance and diffusion angle)

The resin laminated optical body 1-9 was arranged on the light emitting surface 32a of the light source unit 30-c1 to produce the optical unit 1a. Then, the light source 31 was caused to emit light to measure the total light transmittance and diffusion angle of transmitted light having transmitted through the resin laminated optical body 1-9. Measuring conditions were similar to those of Example 1. The results are collectively shown in Table 2.

### <11. Example 10>

### (11-1. Measurement of total light transmittance and diffusion angle)

The resin laminated optical body 1-9 was arranged on the light emitting surface 32a of the light source unit 30-1 to produce the optical unit 1a. Then, the light source 31 was caused to emit light to measure the total light transmittance and diffusion angle of transmitted light having transmitted through the resin laminated optical body 1-9. Measuring conditions were similar to those of Example 1. The results are collectively shown in Table 2.

### <12. Example 11>

### (12-1. Production of resin laminated optical body)

The first to sixth steps and the separation step described above were performed using the flexible master 400-2 to form the resin layer 20 on the front surface of the optical base material 10-1. A light diffusing structure was formed in the surface 21 of this resin layer 20 as the micro concave-convex structure 50. Furthermore, the first to sixth steps and the separation step described above were performed using the flexible master 400-1 to form the resin layer 20 on the rear surface of the optical base material 10-1. A moth-eye structure was formed in the surface 21 of this resin layer 20 as the micro concave-convex structure 50. A resin laminated optical body 1-11 was thereby produced.

### (12-2. Measurement of total light transmittance and diffusion angle)

The resin laminated optical body 1-11 was arranged on the light emitting surface 32a of the light source unit 30-c1 to produce the optical unit 1a. Then, the light source 31 was caused to emit light to measure the total light transmittance and diffusion angle of transmitted light having transmitted through the resin laminated optical body 1-11. Measuring conditions were similar to those of Example 1. The results are collectively shown in Table 2.

### <13. Example 12>

### (11-1. Measurement of total light transmittance and diffusion angle)

The resin laminated optical body 1-11 was arranged on the light emitting surface 32a of the light source unit 30-1 to produce the optical unit 1a. Then, the light source 31 was caused to emit light to measure the total light transmittance and diffusion angle of transmitted light having transmitted through the resin laminated optical body 1-11. Measuring conditions were similar to those of Example 1. The results are collectively shown in Table 2.

### <14. Example 13>

### (12-1. Production of resin laminated optical body)

The first to sixth steps and the separation step described above were performed using the flexible master 400-1 to form the resin layer 20 on the front surface of the optical base material 10-1. A moth-eye structure was formed in the surface 21 of this resin layer 20 as the micro concave-convex structure 50. Furthermore, the first to sixth steps and the separation step described above were performed using the flexible master 400-2 to form the resin layer 20 on the rear surface of the optical base material 10-1. A light diffusing structure was formed in the surface 21 of this resin layer 20 as the micro concave-convex structure 50. A resin laminated optical body 1-13 was thereby produced.

### (12-2. Measurement of total light transmittance and diffusion angle)

The resin laminated optical body 1-13 was arranged on the light emitting surface 32a of the light source unit 30-c1 to produce the optical unit 1a. Then, the light source 31 was caused to emit light to measure the total light transmittance and diffusion angle of transmitted light having transmitted through the resin laminated optical body 1-13. Measuring conditions were similar to those of Example 1. The results are collectively shown in Table 2.

### <15. Example 14>

### (11-1. Measurement of total light transmittance and diffusion angle)

The resin laminated optical body 1-13 was arranged on the light emitting surface 32a of the light source unit 30-1 to produce the optical unit 1a. Then, the light source 31 was caused to emit light to measure the total light transmittance and diffusion angle of transmitted light having transmitted through the resin laminated optical body 1-13. Measuring conditions were similar to those of Example 1. The results are collectively shown in Table 2.

**[Table 2]**

| | | Example 5 | Example 6 | Example 7 | Example 8 | Example 9 | Example 10 | Example 11 | Example 12 | Example 13 | Example 14 |
|---|---|---|---|---|---|---|---|---|---|---|---|
| Diffuser panel | Separately placed/Integrated | Integrated with lens | Integrated with lens | Integrated with lens | Integrated with lens | Integrated with lens | Integrated with lens | Integrated with lens | Integrated with lens | Integrated with lens | Integrated with lens |
| Lens 2 | Front surface | Diffusive | Diffusive | Not processed | Not processed | Diffusive | Diffusive | Diffusive | Diffusive | Anti-reflective | Anti-reflective |
| | Rear surface | Not processed | Not processed | Diffusive | Diffusive | Diffusive | Diffusive | Anti-reflective | Anti-reflective | Diffusive | Diffusive |
| Lens 1 | | Not processed | Anti-reflective | Not processed | Anti-reflective | Not processed | Anti-reflective | Not processed | Anti-reflective | Not processed | Anti-reflective |
| Total light transmittance | | 85% | 89% | 85% | 89% | 85% | 89% | 89% | 93% | 89% | 93% |
| Diffusion angle | | 10° | 10° | 10° | 10° | 15° | 15° | 10° | 10° | 10° | 10° |

Note that, in Table 2, the lenses 1 and 2 indicate the optical base materials 32 and 10-1, respectively. For the diffuser panel, "Integrated with lens" indicates that a light diffusing structure is integrated with at least one of the optical base material 10-1 and the optical base material 32 (that is, a resin layer having the light diffusing structure is formed). The term "Not processed" indicates that no resin layer is formed. The term "Anti-reflective" indicates that a moth-eye structure is formed. The term "Diffusive" indicates that a light diffusing structure is formed.

### <16. Example 15>

### (16-1. Production of light source unit)

The first to seventh steps and the separation step described above were performed to produce a light source unit 30-15. Herein, the flexible master 400-2 was used as the flexible master 400. The light source 31 similar to that of Example 1 was used. The light source unit 30-15 was thereby produced. A light diffusing structure was formed in the surface 41 of the resin layer 40 as the micro concave-convex structure 50.

### (16-2. Measurement of total light transmittance and diffusion angle)

The optical base material 10-1 was arranged on the light emitting surface 32a of the light source unit 30-15 to produce the optical unit 1a. Then, the light source 31 was caused to emit light to measure the total light transmittance and diffusion angle of transmitted light transmitted through the optical base material 10-1. Measuring conditions were similar to those of Example 1. The results are collectively shown in Table 3.

### <17. Example 16>

### (17-1. Measurement of total light transmittance and diffusion angle)

The resin laminated optical body 1-2 was arranged on the light emitting surface 32a of the light source unit 30-15 to produce the optical unit 1a. Then, the light source 31 was caused to emit light to measure the total light transmittance and diffusion angle of transmitted light having transmitted through the resin laminated optical body 1-2. Measuring conditions were similar to those of Example 1. The results are collectively shown in Table 3.

### <18. Example 17>

### (18-1. Measurement of total light transmittance and diffusion angle)

The resin laminated optical body 1-4 was arranged on the light emitting surface 32a of the light source unit 30-15 to produce the optical unit 1a. Then, the light source 31 was caused to emit light to measure the total light transmittance and diffusion angle of transmitted light having transmitted through the resin laminated optical body 1-4. Measuring conditions were similar to those of Example 1. The results are collectively shown in Table 3.

### <19. Example 18>

### (19-1. Measurement of total light transmittance and diffusion angle)

The resin laminated optical body 1-3 was arranged on the light emitting surface 32a of the light source unit 30-15 to produce the optical unit 1a. Then, the light source 31 was caused to emit light to measure the total light transmittance and diffusion angle of transmitted light having transmitted through the resin laminated optical body 1-3. Measuring conditions were similar to those of Example 1. The results are collectively shown in Table 3.

**[Table 3]**

| | | Example 15 | Example 16 | Example 17 | Example 18 |
|---|---|---|---|---|---|
| Diffuser panel | Separately placed/Integrated | Integrated with lens | Integrated with lens | Integrated with lens | Integrated with lens |
| Lens 2 | Front surface | Not processed | Anti-reflective | Anti-reflective | Not processed |
| | Rear surface | Not processed | Not processed | Anti-reflective | Anti-reflective |
| Lens 1 | | Diffusive | Diffusive | Diffusive | Diffusive |
| Total light transmittance | | 85% | 89% | 93% | 89% |
| Diffusion angle | | 12° | 12° | 12° | 12° |

Note that, in Table 3, the lenses 1 and 2 indicate the optical base materials 32 and 10-1, respectively. For the diffuser panel, "Integrated with lens" indicates that a light diffusing structure is integrated with at least one of the optical base material 10-1 and the optical base material 32 (that is, a resin layer having the light diffusing structure is formed). The term "Not processed" indicates that no resin layer is formed. The term "Anti-reflective" indicates that a moth-eye structure is formed. The term "Diffusive" indicates that a light diffusing structure is formed.

### <20. Example 19>

In Examples 19 to 22 and Comparative Example 2, tests for evaluating optical properties of the image display device 2000 illustrated in FIG. 24 (in particular, around the light irradiation device 2010) were conducted. Hereinafter, detailed description will be provided.

### (20-1. Measurement of total light transmittance and diffusion angle)

A raster scanning laser irradiation device was prepared as the light irradiation device 2010. A resin laminated optical body 1-6 was arranged on the optical path of this light irradiation device 2010. Herein, the front surface of the resin laminated optical body 1-6 (the front surface of the optical base material 10-1) was directed to the display 2020 side. Then, the light irradiation device 2010 was caused to output light to measure the total light transmittance and diffusion angle of transmitted light having transmitted through the resin laminated optical body 1-6. Measuring conditions were similar to those of Example 1. The results are collectively shown in Table 4.

### <21. Example 20>

### (21-1. Measurement of total light transmittance and diffusion angle)

The resin laminated optical body 1-9 was arranged on the optical path of the light irradiation device 2010. Herein, the front surface of the resin laminated optical body 1-9 (the front surface of the optical base material 10-1) was directed to the display 2020 side. Then, the light irradiation device 2010 was caused to output light to measure the total light transmittance and diffusion angle of transmitted light having transmitted through the resin laminated optical body 1-9. Measuring conditions were similar to those of Example 1. The results are collectively shown in Table 4.

### <22. Example 21>

### (22-1. Measurement of total light transmittance and diffusion angle)

The resin laminated optical body 1-11 was arranged on the optical path of the light irradiation device 2010. Herein, the front surface of the resin laminated optical body 1-11 (the front surface of the optical base material 10-1) was directed to the display 2020 side. Then, the light irradiation device 2010 was caused to output light to measure the total light transmittance and diffusion angle of transmitted light having transmitted through the resin laminated optical body 1-11. Measuring conditions were similar to those of Example 1. The results are collectively shown in Table 4.

### <23. Example 22>

### (21-1. Measurement of total light transmittance and diffusion angle)

The resin laminated optical body 1-13 was arranged on the optical path of the light irradiation device 2010. Herein, the front surface of the resin laminated optical body 1-13 (the front surface of the optical base material 10-1) was directed to the display 2020 side. Then, the light irradiation device 2010 was caused to output light to measure the total light transmittance and diffusion angle of transmitted light having transmitted through the resin laminated optical body 1-13. Measuring conditions were similar to those of Example 1. The results are collectively shown in Table 4.

### <24. Comparative Example 2>

### (24-1. Measurement of total light transmittance and diffusion angle)

A light diffuser panel and the optical base material 10-1 were arranged in this order on the optical path of the light irradiation device 2010. The light diffuser panel was that used in Example 1. Herein, the front surface of the optical base material 10-1 was directed to the display 2020 side. Then, the light irradiation device 2010 was caused to output light to measure the total light transmittance and diffusion angle of transmitted light transmitted through the optical base material 10-1. Measuring conditions were similar to those of Example 1. The results are collectively shown in Table 4.

**[Table 4]**

| | | Comparative Example 2 | Example 19 | Example 20 | Example 21 | Example 22 |
|---|---|---|---|---|---|---|
| Diffuser panel | Separately placed/Integrated | Separately placed | Integrated with lens | Integrated with lens | Integrated with lens | Integrated with lens |
| Lens | Front surface | Not processed | Diffusive | Diffusive | Diffusive | Anti-reflective |
| | Rear surface | Not processed | Not processed | Diffusive | Anti-reflective | Diffusive |
| Total light transmittance | | 80% | 90% | 90% | 95% | 95% |
| Diffusion angle | | 10° | 10° | 15° | 10° | 10° |

Note that, in Table 4, the lens indicates the optical base material 10-1. For the diffuser panel, "Integrated with lens" indicates that a light diffusing structure is integrated with the optical base material 10-1 (that is, a resin layer having the light diffusing structure is formed). The term "Separately placed" indicates that the light diffuser panel and the optical base material 10-1 are separate from each other. The term "Not processed" indicates that no resin layer is formed. The term "Anti-reflective" indicates that a moth-eye structure is formed. The term "Diffusive" indicates that a light diffusing structure is formed.

### <25. Example 23>

In Example 23 and Comparative Example 3, tests for evaluating optical properties of the image display device 3000 illustrated in FIG. 25 were conducted. Hereinafter, detailed description will be provided.

### (25-1. Preparation of optical base material)

As the optical base material 10 for mirror (hereinafter, also referred to as an "optical base material 10-2"), an object obtained by depositing an aluminum metal film on a cycloolefin polymer ("ZEONEX 480R" made by Zeon Corporation) base material through vacuum deposition was prepared.

### (25-2. Production of resin laminated optical body)

The first to sixth steps and the separation step described above were performed using the flexible master 400-2 to form the resin layer 20 on a reflective surface of the optical base material 10-2 (the surface on which the curved surface 11 is formed). A resin laminated optical body 1-23 was thereby produced. A light diffusing structure was formed in the surface 21 of the resin layer 20 as the micro concave-convex structure 50.

### (25-3. Evaluation of luminance unevenness)

A white LED was prepared as the light irradiation device 3010. Then, the light irradiation device 3010, the liquid crystal panel 3015, the mirror 3020, and the display 3030 were arranged in the image display device 3000. Herein, the resin laminated optical body 1-23 was used as the mirror 3020. Then, the light irradiation device 3010 was caused to output light, and reflected light having been reflected off the resin laminated optical body 1-23 was caused to enter the display 3030. A virtual image was thereby displayed on the display 3030. A luminance difference between central luminance of this virtual image and luminance at the outer edge was measured. The luminance was measured using "CS-2000" made by KONICA MINOLTA Inc. The luminance at the outer edge was an arithmetic mean value of values measured at a plurality of measurement points. Then, in a case where the luminance difference was less than or equal to 10% of the central luminance, luminance unevenness was determined as pass (the luminance is less uneven), and in a case where the luminance difference exceeded 10% of the central luminance, luminance unevenness was determined as fail (the luminance is much uneven). In Example 23, the luminance unevenness was at a pass level. The results are collectively shown in Table 5.

### <26. Comparative Example 3>

Tests similar to those of Example 23 were conducted except that the resin laminated optical body 1-23 was changed to the optical base material 10-2. In Comparative Example 3, the luminance unevenness was at a fail level. The results are collectively shown in Table 5.

**[Table 5]**

| | Comparative Example 3 | Example 23 |
|---|---|---|
| Mirror | Non-diffusive | Diffusive |
| Luminance unevenness | × | ○ |

Note that, in Table 5, the mirror indicates the mirror 3020. The term "Non-diffusive" indicates that no light diffusing structure is formed in the optical base material 10-2. The term "Diffusive" indicates that a light diffusing structure is formed in the optical base material 10-2. For the luminance unevenness, the mark "o" indicates "pass", and the mark "×" indicates "fail".

### <27. Example 24>

In Examples 24 to 26 and Comparative Example 4, tests for evaluating optical properties of the image display device 4000 illustrated in FIG. 26 were conducted. Hereinafter, detailed description will be provided.

### (27-1. Evaluation of luminance unevenness)

A white LED was prepared as the light irradiation device 4010. Then, the light irradiation device 4010, the liquid crystal panel 4015, the mirrors 4020, 4030, and the display 4040 were arranged in the image display device 4000. Herein, the resin laminated optical body 1-23 was used as the mirror 4020, and the optical base material 10-2 was used as the mirror 4030. Then, the light irradiation device 4010 was caused to output light, and reflected light having been reflected off the resin laminated optical body 1-23 was caused to enter the display 4040. A virtual image was thereby displayed on the display 4040. A luminance difference between central luminance of this virtual image and luminance at the outer edge was measured. The luminance was measured similarly to Example 23. Then, in a case where the luminance difference was less than or equal to 10% of the central luminance, luminance unevenness was determined as pass (the luminance is less uneven), and in a case where the luminance difference exceeded 10% of the central luminance, luminance unevenness was determined as fail (the luminance is much uneven). In Example 24, the luminance unevenness was at a pass level. The results are collectively shown in Table 6.

### <28. Example 25>

### (28-1. Evaluation of luminance unevenness)

Tests similar to those of Example 24 were conducted except that the optical base material 10-2 was used as the mirror 4020, and the resin laminated optical body 1-23 was used as the mirror 4030. The luminance unevenness was at a pass level. The results are collectively shown in Table 6.

### <29. Example 26>

### (29-1. Evaluation of luminance unevenness)

Tests similar to those of Example 24 were conducted except that the resin laminated optical body 1-23 was used as the mirrors 4020 and 4030. The luminance unevenness was at a pass level. The results are collectively shown in Table 6.

### <30. Comparative Example 4>

Tests similar to those of Example 24 were conducted except that the optical base material 10-2 was used as the mirrors 4020 and 4030. The luminance unevenness was at a fail level. The results are collectively shown in Table 6.

**[Table 6]**

| | Comparative Example 4 | Example 24 | Example 25 | Example 26 |
|---|---|---|---|---|
| Mirror 1 | Non-diffusive | Diffusive | Non-diffusive | Diffusive |
| Mirror 2 | Non-diffusive | Non-diffusive | Diffusive | Diffusive |
| Luminance unevenness | × | ○ | ○ | ○ |

Note that, in Table 6, mirrors 1 and 2 indicate the mirrors 4020 and 4030, respectively. The remaining terms are similar to those of Table 5.

As is clear from Examples 1 to 26 and Comparative Examples 1 to 4, the light emission quality concerning total light transmittance, luminance unevenness, or the like was improved in Examples 1 to 26 that satisfy requirements of the present embodiment as compared with Comparative Examples 1 to 4.

The preferred embodiment(s) of the present invention has/have been described above in detail with reference to the accompanying drawings, whilst the present invention is not limited to the above examples. A person skilled in the art may find various alterations and modifications within the scope of the appended claims. The scope of the present invention is defined by the appended claims.

### Reference Signs List

- 1: resin laminated optical body
- 10: optical base material
- 20: resin layer
- 30: light source unit
- 31: light source
- 32: optical base material
- 40: resin layer
- 50: micro concave-convex structure

## Claims

1. A light source unit (30) comprising:
an optical base material (32),
a light source (31) integrated with the optical base material (32); and
a resin layer (40) provided on a light emitting surface of the optical base material (32), wherein
a curved surface (33) is formed on an interface (32a) of the optical base material (32) with the resin layer (40), and the resin layer (40) is laminated along the curved surface (33), and the curved surface (33) of the optical base material (32) allows the optical base material (32) to function as a lens for the light source (31), and
a micro concave-convex structure (50) is formed in a surface (41) of the resin layer (40).

2. The light source unit (30) according to claim 1, wherein
the micro concave-convex structure (50) includes at least one of a moth-eye structure, a light diffusing structure, a microlens array structure, and a diffraction grating structure, and
any one or more types of the these structures are mixed in the surface (41) of the resin layer (40).

3. The light source unit (30) according to claim 1, wherein
the micro concave-convex structure (50) includes a moth-eye structure, and
an average interval between micro concavities or micro convexities constituting the micro concave-convex structure (50) is 50 nm to 400 nm.

4. The light source unit (30) according to claim 1, wherein
the micro concave-convex structure (50) includes a moth-eye structure, and
a height difference between one of micro concavities and one of micro convexities adjacent to each other is 100 to 500 nm.

5. An optical unit (1a) comprising:
a resin laminated optical body (1), and
the light source unit (30) as defined in any one of claims 1 to 4,
wherein the resin laminated optical body (1) includes
an optical base material (10) having a curved surface; and
a resin layer (20) provided on the curved surface of the optical base material (10), wherein
a light diffusing structure is formed in a surface of the resin layer (40).

6. A light irradiation device (1010) comprising:
the optical unit (1a) as defined in claim 5.

7. An image display device (2000) comprising:
the light irradiation device (1010) as defined in claim 6.

8. A method for manufacturing a light source unit (30), comprising:
a first step of preparing an optical base material (32) having a curved surface (33) and a light source (31) integrated with the optical base material (32);
a second step of forming an uncured resin layer on the curved surface (33) of the optical base material (32);
a third step of preparing a flexible master having an inverted structure of a micro concave-convex structure (50) formed in a surface, the flexible master having flexibility;
a fourth step of bringing the flexible master into proximity to the uncured resin layer;
a fifth step of pressing the inverted structure of the flexible master against the uncured resin layer while applying a printing pressure to the flexible master to deform the flexible master; and
a sixth step of curing the uncured resin layer in a state where the inverted structure of the flexible master is pressed against the uncured resin layer to form a resin layer (41) on the curved surface of the optical base material (32).

9. The method for manufacturing a light source unit (30) according to claim 8, wherein
the micro concave-convex structure (50) includes at least one of a moth-eye structure, a light diffusing structure, a microlens array structure, and a diffraction grating structure.

10. The method for manufacturing a light source unit (30) according to claim 9,
wherein
the micro concave-convex structure (50) includes the moth-eye structure, and
an average interval between micro concavities or micro convexities constituting the micro concave-convex structure is 50 nm to 400 nm.

11. The method for manufacturing a light source unit (30) according to claim 9 or 10, wherein
the micro concave-convex structure (50) includes the moth-eye structure, and
a height difference between one of micro concavities and one of micro convexities adjacent to each other is 100 to 500 nm.

## Patentansprüche

1. Lichtquelleneinheit (30), umfassend:
ein optisches Basismaterial (32),
eine Lichtquelle (31), die in das optische Basismaterial (32) integriert ist; und
eine Harzschicht (40), die auf einer lichtemittierenden Oberfläche des optischen Basismaterials (32) vorgesehen ist, wobei
eine gekrümmte Oberfläche (33) an einer Grenzfläche (32a) des optischen Basismaterials (32) mit der Harzschicht (40) ausgebildet ist und die Harzschicht (40) entlang der gekrümmten Oberfläche (33) laminiert ist, und die gekrümmte Oberfläche (33) des optischen Basismaterials (32) es dem optischen Basismaterial (32) ermöglicht, als Linse für die Lichtquelle (31) zu fungieren, und
eine mikrokonkav-konvexe Struktur (50) in einer Oberfläche (41) der Harzschicht (40) ausgebildet ist.

2. Lichtquelleneinheit (30) nach Anspruch 1, wobei
die mikrokonkav-konvexe Struktur (50) mindestens eine der folgenden Strukturen aufweist: eine Mottenaugenstruktur, eine Lichtstreustruktur, eine Mikrolinsenanordnungsstruktur und eine Beugungsgitterstruktur, und
eine oder mehrere dieser Strukturen in der Oberfläche (41) der Harzschicht (40) gemischt sind.

3. Lichtquelleneinheit (30) nach Anspruch 1, wobei
die mikrokonkav-konvexe Struktur (50) eine Mottenaugenstruktur aufweist und
ein durchschnittlicher Abstand zwischen den Mikrokonkavitäten oder Mikrokonvexitäten, die die mikrokonkav-konvexe Struktur (50) bilden, 50 nm bis 400 nm beträgt.

4. Lichtquelleneinheit (30) nach Anspruch 1, wobei
die mikrokonkav-konvexe Struktur (50) eine Mottenaugenstruktur aufweist und
ein Höhenunterschied zwischen einer der Mikrokonkavitäten und einer der Mikrokonvexitäten, die nebeneinander liegen, 100 bis 500 nm beträgt.

5. Optische Einheit (1a), die umfasst:
einen harzlaminierten optischen Körper (1) und
die Lichtquelleneinheit (30) nach einem der Ansprüche 1 bis 4,
wobei der harzlaminierte optische Körper (1) aufweist:
ein optisches Basismaterial (10) mit einer gekrümmten Oberfläche; und
eine Harzschicht (20), die auf der gekrümmten Oberfläche des optischen Basismaterials (10) vorgesehen ist, wobei
eine Lichtstreustruktur in einer Oberfläche der Harzschicht (40) ausgebildet ist.

6. Lichtbestrahlungsvorrichtung (1010), umfassend:
die optische Einheit (1a) nach Anspruch 5.

7. Bildanzeigevorrichtung (2000), umfassend:
die Lichtbestrahlungsvorrichtung (1010) nach Anspruch 6.

8. Verfahren zur Herstellung einer Lichtquelleneinheit (30), umfassend:
einen ersten Schritt des Vorbereitens eines optischen Basismaterials (32) mit einer gekrümmten Oberfläche (33) und einer Lichtquelle (31), die in das optische Basismaterial (32) integriert ist;
einen zweiten Schritt des Bildens einer ungehärteten Harzschicht auf der gekrümmten Oberfläche (33) des optischen Basismaterials (32);
einen dritten Schritt des Vorbereitens eines flexiblen Masters mit einer invertierten Struktur einer mikrokonkav-konvexen Struktur (50), die in einer Oberfläche gebildet ist,
wobei das flexible Master Flexibilität besitzt;
einen vierten Schritt des Annäherns des flexiblen Masters an die ungehärtete Harzschicht;
ein fünfter Schritt des Pressens der invertierten Struktur des flexiblen Masters gegen die ungehärtete Harzschicht, während ein Druck auf das flexible Master ausgeübt wird, um das flexible Master zu verformen; und
ein sechster Schritt des Härtens der ungehärteten Harzschicht in einem Zustand, in dem die invertierte Struktur des flexiblen Masters gegen die ungehärtete Harzschicht gedrückt wird, um eine Harzschicht (41) auf der gekrümmten Oberfläche des optischen Basismaterials (32) zu bilden.

9. Verfahren zur Herstellung einer Lichtquelleneinheit (30) nach Anspruch 8, wobei
die mikrokonkav-konvexe Struktur (50) mindestens eines von einer Mottenaugenstruktur, einer Lichtstreustruktur, einer Mikrolinsenanordnungsstruktur und einer Beugungsgitterstruktur aufweist.

10. Verfahren zur Herstellung einer Lichtquelleneinheit (30) nach Anspruch 9, wobei
die mikrokonkav-konvexe Struktur (50) die Mottenaugenstruktur aufweist und
ein durchschnittlicher Abstand zwischen den Mikrokonkavitäten oder Mikrokonvexitäten, die die mikrokonkav-konvexe Struktur bilden, 50 nm bis 400 nm beträgt.

11. Verfahren zur Herstellung einer Lichtquelleneinheit (30) nach Anspruch 9 oder 10, wobei
die mikrokonkav-konvexe Struktur (50) die Mottenaugenstruktur aufweist und
der Höhenunterschied zwischen einer der Mikrokonkavitäten und einer der Mikrokonvexitäten, die nebeneinander liegen, 100 bis 500 nm beträgt.

## Revendications

1. Module de source lumineuse (30) comprenant :
un matériau de base optique (32),
une source lumineuse (31) intégrée au matériau de base optique (32) ; et
une couche de résine (40) prévue sur une surface d'émission lumineuse du matériau de base optique (32), dans lequel
une surface incurvée (33) est formée sur une interface (32a) du matériau de base optique (32) avec la couche de résine (40), et la couche de résine (40) est stratifiée le long de la surface incurvée (33), et la surface incurvée (33) du matériau de base optique (32) permet au matériau de base optique (32) de fonctionner en tant que lentille pour la source lumineuse (31), et
une microstructure concave-convexe (50) est formée dans une surface (41) de la couche de résine (40).

2. Module de source lumineuse (30) selon la revendication 1, dans lequel
la microstructure concave-convexe (50) inclut au moins une d'une structure d'œil de papillon de nuit, d'une structure de diffusion lumineuse, d'une structure de série de microlentilles et d'une structure de réseau de diffraction, et
l'un quelconque ou plusieurs types de ces structures sont mélangés dans la surface (41) de la couche de résine (40).

3. Module de source lumineuse (30) selon la revendication 1, dans lequel
la microstructure concave-convexe (50) inclut une structure d'œil de papillon de nuit, et
un intervalle moyen entre des microconcavités ou microconvexités constituant la microstructure concave-convexe (50) est de 50 nm à 400 nm.

4. Module de source lumineuse (30) selon la revendication 1, dans lequel
la microstructure concave-convexe (50) inclut une structure d'œil de papillon de nuit, et
une différence de hauteur entre une des microconcavités et une des microconvexités adjacentes l'une à l'autre est de 100 à 500 nm.

5. Module optique (1a) comprenant :
un corps optique stratifié en résine (1), et
le module de source lumineuse (30) selon l'une quelconque des revendications 1 à 4,
dans lequel le corps optique stratifié en résine (1) inclut
un matériau de base optique (10) ayant une surface incurvée ; et
une couche de résine (20) prévue sur la surface incurvée du matériau de base optique (10), dans lequel
une structure de diffusion lumineuse est formée dans une surface de la couche de résine (40).

6. Dispositif d'irradiation lumineuse (1010) comprenant :
le module optique (1a) selon la revendication 5.

7. Dispositif d'affichage d'image (2000) comprenant :
le dispositif d'irradiation lumineuse (1010) selon la revendication 6.

8. Procédé de fabrication d'un module de source lumineuse (30), comprenant :
une première étape de préparation d'un matériau de base optique (32) ayant une surface incurvée (33) et une source lumineuse (31) intégrée au matériau de base optique (32) ;
une deuxième étape de formation d'une couche de résine non durcie sur la surface incurvée (33) du matériau de base optique (32) ;
une troisième étape de préparation d'une matrice flexible ayant une structure inversée d'une microstructure concave-convexe (50) formée dans une surface, la matrice flexible ayant de la flexibilité ;
une quatrième étape d'amenée de la matrice flexible à proximité de la couche de résine non durcie ;
une cinquième étape de pressage de la structure inversée de la matrice flexible contre la couche de résine non durcie tout en appliquant une pression d'impression à la matrice flexible pour déformer la matrice flexible ; et
une sixième étape de durcissement de la couche de résine non durcie dans un état où la structure inversée de la matrice flexible est pressée contre la couche de résine non durcie pour former une couche de résine (41) sur la surface incurvée du matériau de base optique (32).

9. Procédé de fabrication d'un module de source lumineuse (30) selon la revendication 8, dans lequel
la microstructure concave-convexe (50) inclut au moins une d'une structure d'œil de papillon de nuit, d'une structure de diffusion lumineuse, d'une structure de série de microlentilles et d'une structure de réseau de diffraction.

10. Procédé de fabrication d'un module de source lumineuse (30) selon la revendication 9, dans lequel
la microstructure concave-convexe (50) inclut une structure d'œil de papillon de nuit, et
un intervalle moyen entre des microconcavités ou microconvexités constituant la microstructure concave-convexe est de 50 nm à 400 nm.

11. Procédé de fabrication d'un module de source lumineuse (30) selon la revendication 9 ou 10, dans lequel
la microstructure concave-convexe (50) inclut une structure d'œil de papillon de nuit, et
une différence de hauteur entre une des microconcavités et une des microconvexités adjacentes l'une à l'autre est de 100 à 500 nm.
